# EUROPÄISCHE PATENTSCHRIFT

(11) **EP 2 795 244 B1**
(45) Veröffentlichungstag und Bekanntmachung des Hinweises auf die Patenterteilung: **07.02.2018**
(21) Anmeldenummer: 11808640.4
(22) Anmeldetag: 21.12.2011
(51) Int. Cl.: G01B 11/00

(54) **VERFAHREN ZUM KOPPELN ZWEIER SYSTEMKOMPONENTEN EINES MESSGERÄTS, INSBESONDERE EINES KOORDINATENMESSGERÄTS**
METHOD FOR COUPLING TWO SYSTEM COMPONENTS OF A MEASURING DEVICE, IN PARTICULAR A CO-ORDINATE MEASURING DEVICE
PROCÉDÉ DE COUPLAGE DE DEUX COMPOSANTS DE SYSTÈME D'UN APPAREIL DE MESURE, EN PARTICULIER D'UN APPAREIL DE MESURE DE COORDONNÉES

(43) Veröffentlichungstag der Anmeldung: 29.10.2014
(73) Patentinhaber: Carl Zeiss Industrielle Messtechnik GmbH, 73447 Oberkochen (DE)
(72) Erfinder: ENGEL, Thomas, 73432 Aalen (DE)
(74) Vertreter: Witte, Weller & Partner Patentanwälte mbB
(86) Internationale Anmeldenummer: PCT/EP2011/073700
(87) Internationale Veröffentlichungsnummer: WO 2013/091697

(56) Entgegenhaltungen:
- EP-A1- 0 404 275
- EP-A1- 2 019 282
- EP-A1- 2 194 357
- EP-A2- 1 643 208
- DE-A1-102007 054 915
- US-A- 4 561 776

## Beschreibung

Die vorliegende Erfindung betrifft ein Verfahren zum Koppeln einer ersten Systemkomponente und einer zweiten Systemkomponente eines Messgeräts, insbesondere eines Koordinatenmessgeräts, zum Ermitteln einer Eigenschaft, insbesondere dreidimensionaler Koordinaten und/oder anderer spezifischer lokaler Eigenschaften wie zum Beispiel der Rauheit, der Farbe oder des Streuverhaltens, eines zu vermessenden Objekts mittels eines Sensors, wobei eine Schnittstellenanordung zwischen der ersten Systemkomponente und der zweiten Systemkomponente bereitgestellt wird, wobei die Schnittstellenanordnung mit mindestens einer aus mindestens zwei elektrischen Übergangsstrecken gebildeten elektrischen Schnittstelle zum Übertragen einer ersten elektrischen Spannung zwischen der ersten Systemkomponente und der zweiten Systemkomponente und mindestens einer aus Lichtwellenleitern gebildeten optischen Schnittstelle bereitgestellt wird.

Gemäß einem weiteren Aspekt betrifft die vorliegende Erfindung ein Messgerät, insbesondere ein Koordinatenmessgerät, zum Ermitteln einer Eigenschaft, insbesondere dreidimensionaler Koordinaten und/oder anderer spezifischer lokaler Eigenschaften wie zum Beispiel der Rauheit, der Farbe oder des Streuverhaltens, eines zu vermessenden Objekts mittels eines Sensors, mit einer ersten Systemkomponente und einer zweiten Systemkomponente, wobei eine Schnittstellenanordnung zwischen der ersten Systemkomponente und der zweiten Systemkomponente gebildet ist, wobei die Schnittstellenanordnung mindestens einer aus mindestens zwei elektrischen Übertragungsstrecken gebildete elektrische Schnittstelle zum Übertragen von elektrischer Energie zwischen der ersten Systemkomponente und der zweiten Systemkomponente und mindestens einer aus Lichtwellenleitungen gebildete optische Schnittstelle aufweist.

Ein solches Verfahren und ein solches Koordinatenmessgerät sind beispielsweise aus der Druckschrift EP 2 194 357 A1 bekannt.

Koordinatenmessgeräte sind im Stand der Technik allgemein bekannt. Sie dienen dazu, beispielsweise im Rahmen einer Qualitätssicherung Werkstücke zu überprüfen oder die Geometrie eines Werkstücks vollständig im Rahmen eines sogenannten "Reverse Engineering" zu ermitteln. Darüber hinaus sind vielfältige weitere Anwendungsmöglichkeiten denkbar.

In derartigen Koordinatenmessgeräten können verschiedene Arten von Sensoren zur Anwendung kommen, um die Koordinaten eines zu vermessenden Werkstücks zu erfassen. Beispielsweise sind hierzu taktil messende Sensoren bekannt, wie sie beispielsweise von der Anmelderin unter der Produktbezeichnung "VAST", "VAST XT" oder "VAST XXT" vertrieben werden. Hierbei wird die Oberfläche des zu vermessenden Werkstücks mit einem Taststift angetastet, dessen Koordinaten im Messraum ständig bekannt sind. Ein derartiger Taststift kann auch entlang der Oberfläche eines Werkstücks bewegt werden, so dass in einem solchen Messvorgang im Rahmen eines sogenannten "Scanning-Verfahrens" eine Vielzahl von Messpunkten in festgelegten zeitlichen Abständen erfasst werden kann.

Darüber hinaus ist es bekannt, optische Sensoren einzusetzen, die ein berührungsloses Erfassen der Koordinaten eines Werkstücks ermöglichen. Ein Beispiel für einen derartigen optischen Sensor ist der unter der Produktbezeichnung "ViScan" von der Anmelderin vertriebene optische Sensor.

Die Sensoren können dann in verschiedenen Arten von Messaufbauten verwendet werden. Ein Beispiel für einen solchen Messaufbau ist das Produkt "O-INSPECT" der Anmelderin. Bei einem derartigen Gerät finden sowohl ein optischer Sensor als auch ein taktiler Sensor Anwendung, um verschiedene Prüfaufgaben an einer Maschine und idealerweise mit einer einzigen Aufspannung eines zu vermessenden Werkstücks durchzuführen. Auf diese Weise lassen sich einfach sämtliche Prüfaufgaben beispielsweise in der Medizintechnik, der Kunststofftechnik, der Elektronik und der Feinmechanik durchführen. Selbstverständlich sind darüber hinaus auch verschiedene andere Aufbauten denkbar.

Derartige Sensorsysteme bzw. Sensorköpfe, die sowohl taktile als auch optische Sensoren tragen, finden in der Koordinatenmesstechnik zunehmend Bedeutung. Eine Kombination taktiler und optischer Sensoren ermöglicht es, in einem einzigen Koordinatenmessgerät die Vorteile der hohen Genauigkeit eines taktilen Messsystems mit der Geschwindigkeit eines optischen Messsystems zu kombinieren. Des Weiteren werden Kalibriervorgänge bei Sensorwechseln vermieden, ebenso wie ein eventuelles Umspannen eines Werkstücks.

Klassischerweise ist der Sensorkopf, der auch als Sensorsystem bezeichnet werden kann, mit einem Trägersystem verbunden, welches das Sensorsystem stützt und bewegt. Im Stand der Technik sind verschiedene Trägersysteme bekannt, beispielsweise Portalsysteme, Ständer-, Horizontalarm- und Armsysteme, alle Arten von Robotersystemen und letztlich geschlossene CT-Systeme bei mit Röntgenstrahlen arbeitenden Sensorsystemen. Die Trägersysteme können dabei des Weiteren Systemkomponenten aufweisen, die ein möglichst flexibles Positionieren des Sensorkopfs ermöglichen. Ein Beispiel hierfür ist das unter der Bezeichnung "RDS" vertriebene Dreh-Schwenk-Gelenk der Anmelderin. Darüber hinaus können verschiedene Adapter vorgesehen sein, um die unterschiedlichen Systemkomponenten des Trägersystems untereinander und mit dem Sensorsystem zu verbinden.

Unter einer "Systemkomponente" wird im Rahmen der vorliegenden Anmeldung jedes solche Element des Trägersystems und der Sensorkopf an sich verstanden. Somit bildet der Sensorkopf für sich genommen eine Systemkomponente. Des Weiteren bildet beispielsweise ein Adapter für sich genommen eine Systemkomponente, ein Dreh-Schwenk-Gelenk eine Systemkomponente, ein Portal eines Portalaufbaus eine Systemkomponente, ein Wechselmagazin eine Systemkomponente usw. Die vorliegende Erfindung betrifft somit sämtliche Schnittstellenanordnungen zweier beliebiger solcher Systemkomponenten.

In Koordinatenmessgeräten mit taktilen Sensorsystemen ist zum Koppeln zweier Systemkomponenten üblicherweise an jeder der Systemkomponenten ein sogenannter "Wechselteller" bzw. eine Wechselfläche vorgesehen. Die Wechselflächen sind derart ausgestaltet, dass sie aneinander angebracht werden können und einen Austausch von Daten in zwei Richtungen, zum Beispiel Messdaten und/oder Steuersignalen, ermöglichen. Üblicherweise sind diese Wechselflächen nach einem bestimmten Muster bzw. Standard aufgebaut, um verschiedene Systemkomponenten beliebig miteinander koppeln zu können, beispielsweise verschiedene Sensorköpfe an ein Dreh-Schwenk-Gelenk usw. Daneben kommt es dabei auch darauf an, dass die Wechselflächen höchst genau reproduzierbar relativ zueinander angeordnet werden. Andernfalls würde der Kalibrieraufwand nach dem Wechseln einer Systemkomponente enorm steigen. In der Regel wird hierzu ein sogenanntes Dreipunktlager verwendet, das drei jeweils zueinander um 120° versetzte Lager über die Wechselfläche verteilt vorsieht. Jedes dieser Lager begrenzt eine laterale Bewegung der Wechselflächen der beiden miteinander zu koppelnden Systemkomponenten zueinander, so dass eine eindeutige Orientierung und Anordnung der beiden Systemkomponenten relativ zueinander möglich wird. Das Dreipunktlager ist in der Regel mit einem äußeren, insbesondere ringförmigen, Außenbereich der Wechselflächen versehen. Der Außenbereich umgibt einen Zentralbereich. In diesem Zentralbereich ist in der Regel eine elektromagnetische Halteeinrichtung vorgesehen. Dabei weist eine Systemkomponente, insbesondere die trägersystemseitige Systemkomponente, einen Elektromagneten auf, und die andere Systemkomponente, in der Regel die sensorkopfseitige Systemkomponente, weist eine Ankerscheibe bzw. Schlussführungsteile auf. Auf diese Weise lassen sich die beiden Systemkomponenten mittels des Elektromagneten fest in das Dreipunktlager aneinanderpressen. Selbstverständlich ist auch eine Kopplung mittels zweier Permanentmagneten möglich.

Bisher wird die Datenrate für eine Übertragung auf ungefähr 80 bis 100 Megabit begrenzt. Dies ist jedoch für die Datenübertragung moderner Kamerasysteme zu wenig, da bei einer Bildgröße von einem Megapixel und einer Auflösung von 8 Bit pro Bild 1 MB an Daten anfallen. Bei einer Bildrate von 25 oder von 50 Bildern fallen damit 50 Megabit bzw. 400 Megabit an Daten zur Übertragung an. Dies ist mehr, als heutzutage mit modernen Funkübertragungsstrecken übertragen werden kann. Standardtechnologien enden dort bei aktuell 300 Megabyte für das WLAN der zweiten Generation. Des Weiteren können Funkübertragungen zumeist nicht kontinuierlich mit voller Bandbreite erfolgen, was eine kontinuierliche Messung zusätzlich erschwert oder sogar verhindert. Mit bekannten Technologien ist folglich eine effiziente Übertragung großer Bilddatenmengen kaum möglich. Dabei sind größere Sensoren mit mehreren Megapixeln und auch Datenraten mit 100 bis 150 Hz bei modernen Kamerasystemen üblich. Ebenso gibt es einen Trend zu höheren digitalen Auflösungen von 10 Bit oder 12 Bit, was auch bei kleineren Sensoren die anfallende Datenmenge entsprechend erhöht.

In Werkzeugmaschinen werden durchaus Funkübertragungssysteme für Koordinatenmessdaten verwendet. Da dort aber nur taktile Sensoren verwendet werden, sind die Datenraten deutlich geringer. Typischerweise werden dort pro Sekunde nur wenige 100 Messpunkte genommen. Diese Datenübertragung ist mit standardisierten und gebräuchlichen Funkübertragungssystemen deshalb problemlos möglich. Das Problem für die Koordinatenmessgeräte stellt sich also genau dann, wenn der verwendete Sensor für schnelle Messungen und damit verbunden auch hohe Datenraten geeignet ist. Dieses Problem tritt also insbesondere bei schnellen scannenden oder optischen Sensoren auf. Schnelle scannende Sensoren arbeiten zumeist optisch und beinhalten einzelne Detektoren oder Detektorarrays, wie sie zum Beispiel mit Kameras auf CCD oder CMOS Basis realisiert werden können. Somit stellt sich hier typischerweise immer die gleiche Aufgabe, anfallende große Datenmengen schnell, effizient und möglichst störungsfrei durch das System bis zur Auswertungseinheit zu übertragen.

Des Weiteren zeigen die Druckschriften DE 10 2004 014 153 A1, EP 0 362 625 A2, DE 200 08 721 U1 und WO 2008/098716 A1 Vorrichtungen zum Koppeln verschiedener Objektivanordnungen auf einen optischen Sensorkopf.

Des Weiteren zeigt die Druckschrift US 4 561 776 A einen elektro-optischen Sensor für eine Werkzeugmaschine, bei dem empfangene Signale über elektrische und/oder faseroptische Leitungen übertragen werden können.

Bisher mangelt es im Stand der Technik jedoch an Schnittstellenanordnungen, die ein flexibles Anordnen von sowohl taktil als auch optisch messenden Sensorköpfen in Koordinatenmessgeräten bei effektiver Energieübertragung und hohen Datenübertragungsraten ermöglichen.

Eine objektive technische Aufgabe der vorliegenden Erfindung besteht darin, eine Schnittstellenanordnung einer Systemkomponente eines Koordinatenmessgeräts bzw. ein Koordinatenmessgerät zu verbessern.

Gemäß einem ersten Aspekt der Erfindung wird ein Verfahren gemäß Anspruch 1 vorgeschlagen.

Insbesondere ist das Messgerät ein Koordinatenmessgerät und die Eigenschaft sind dreidimensionale Koordinaten des zu vermessenden Objekts.

Insbesondere kann vorgesehen sein, dass das Messsignal ein analoges Messsignal ist, und das analoge Messsignal in ein digitales Messdatensignal transformiert wird, und dass das digitale Messdatensignal mittels der Lichtwellenleiter der mindestens einen optischen Schnittstelle übertragen wird. Alternativ oder kumulativ kann aber auch eine Übertragung des Messsignals in analoger Form mittels der Lichtwellenleiter der mindestens einen optischen Schnittstelle erfolgen.

Gemäß einem weiteren Aspekt wird ein Messgerät gemäß Anspruch 12 vorgeschlagene.

Insbesondere ist dabei das Messgerät ein Koordinatenmessgerät und die Eigenschaft sind dreidimensionale Koordinaten des zu vermessenden Objekts.

Insbesondere kann dabei vorgesehen sein, dass das Koordinatenmessgerät des Weiteren einen Analog-Digital-Umsetzer zum Transformieren einer mittels des Sensors erfassten analogen Messsignals in ein digitales Messdatensignal aufweist, der derart mit der optischen Schnittstelle verbunden ist, dass eine Übertragung des digitalen Messdatensignals über die mindestens eine optische Schnittstelle erfolgt. Alternativ oder kumulativ kann aber auch dabei eine Übertragung des Messsignals in analoger Form mittels der Lichtwellenleiter der mindestens einen optischen Schnittstelle erfolgen.

Insbesondere kann dabei eine Übertragung des digitalen Messdatensignals über die mindestens eine optische Schnittstelle an eine Recheneinheit des Koordinatenmessgeräts erfolgen. Des Weiteren kann insbesondere dabei vorgesehen sein, dass die Versorgung des Sensors mit elektrischer Energie über die mindestens zwei elektrischen Übertragungsstrecken eine Versorgung des Sensors mit einer ersten elektrischen Spannung ist.

Mit der aufgezeigten Lösung wird ein neues Verkabelungssystem für eine Koordinatenmessmaschine vorgeschlagen. Dabei sollen die bekannten Grundlagen aus den heutigen Systemen weiter entwickelt werden. Aufgrund der oben genannten Einschränkungen bezüglich der elektrischen Übertragungsstrecke erscheint eine weitere Optimierung der elektrischen Übertragungselemente nicht sinnvoll, da eine Erweiterung der Übertragungsbandbreite um mindestens eine Größenordnung, erreicht werden müsste. Dieses ist bei der Verwendung der üblichen Methoden nur mit Einschränkungen möglich. Aus diesem Grund ist es geboten, dass Übertragungsprinzip grundsätzlich zu ändern. Aus der Telekommunikation ist eine Datenübertragung über Lichtleitfasern und über große Strecken bekannt. Auch hohe Datenraten im Bereich mehrerer Gigabyte oder gar mehrere 100 Gigabyte sind möglich. Allerdings werden solche Systeme mit festen Schnittstellen aufgebaut. An diesen Schnittstellen werden zum Beispiel unterschiedliche Lichtleiterkabel fest über einen Koppler miteinander verbunden. Dieser Kopplung kann neben Schalteigenschaften für den Wechsel eines Lichtleiterkabels auch eine Verstärkereinheit beinhalten, um das ankommende Signal für die Übertragung einer weiteren langen Strecke passend zu verstärken und die Streckendämpfung auszugleichen. Bei Koordinatenmessmaschinen besteht das oben genannte Problem, dass die unterschiedlichen Komponenten der Maschine auswechselbar sein müssen oder aber eine Verbindung über eine oder mehrere Drehachsen hinweg geschaffen werden muss. Für diese Aufgaben gab es bisher keine Lösung.

Ein weiterer Vorteil ist die galvanische Trennung zumindest für die Messdatensignale. Die vorgeschlagene Lösung ermöglicht es in der Koordinatenmesstechnik, Sensorköpfe mit mehreren Sensoren, insbesondere einem taktilen und einem optischen Messsensor, zu nutzen und geeignete Datenübertragungsbreiten an den in Koordinatenmessgeräten vorhandenen Wechselschnittstellen bereitzustellen. Strukturell bedingt durch die vorgeschlagene Lösung müssen alle Daten der Sensoren vor der Übertragung digitalisiert werden. Dies ist aus dem Stand der Technik bekannten Koordinatenmessgeräten nicht der Fall. Die so digitalisierten Messdatensignale des mindestens einen Sensors können dann über einen geeigneten Treiberbaustein für Lichtleitfasern bzw. Lichtwellenleiter in die mittels der Lichtwellenleiter bereitgestellte optische Übertragungsstrecke eingekoppelt werden. Neben der reinen Digitalisierung in dem Analog-Digital-Umsetzer kann dieser auch eine Kompression der Messdaten vornehmen. Zum Beispiel können nur Teilbereiche, wie etwa eine AOI (area of interest) oder ROI (region of interest), des Sensors übertragen werden. Auch eine Reduktion auf Messdaten, die ein einen gewissen Grenzwert, d.h. eine Signifikanzgrenze, überschreiten oder unterschreiten kann vorgenommen werden. Diese Datenreduktion hilft dabei, die zu übertragene Datenmenge zu reduzieren, ohne dafür noch leistungsfähigere Übertragungsleitungen bereitstellen zu müssen.

Letztlich führen das vorgeschlagene Verfahren und das vorgeschlagene Koordinatenmessgerät zu einer Minimierung der Anzahl von notwendigen Leitungen bzw. elektrischen und optischen Übertragungsstrecken über Wechselschnittstellen hinweg. Auf diese Weise kann eine Steifigkeit der Kabelbäume in den Koordinatenmessgeräten reduziert werden. Dies wirkt sich vorteilhaft auf einer Mechanik der Koordinatenmessgeräte aus und ermöglicht eine Besserung der Genauigkeit in den Messungen. Auch wird auf diese Weise eine geringere Dimensionierung der Kinematik und des Trägersystems des Koordinatenmessgeräts ermöglicht, was Material, Aufwand und damit Kosten spart. Aufgrund der geringeren zu verbauenden Massen kann das Koordinatenmessgerät schneller bewegt werden, ohne Vorgaben der Sicherheitstechnik über maximale kinetische Energien und Quetschkräfte zu verletzen. Letztlich wird wie gefordert eine Übertragungsdatenrate erhöht und eine sichere und schnellere Übertragung auch großer Datenmengen bereitgestellt.

Eine Digitalisierung der Messdaten sollte möglichst verlustarm mit möglichst niedriger elektrischer Leistung ausgeführt sein. Damit wird die Wärmeentwicklung reduziert und so die messtechnische Stabilität erhöht. Zudem ist es vorteilhaft, wenn die Digitalisierung auch sehr schnell erfolgt/erfolgen kann und dennoch verlustarm ist. Da eine höhere Rechengeschwindigkeit immer zu mehr Wärmefreisetzung führt, kann auch eine einstellbare Digitalisiergeschwindigkeit und/oder Datentiefe (in Bit pro Datenpunkt) möglich sein, um die thermische Last zu optimieren. Auch die oben beschriebene Datenkompression bzw. die Übertragung von selektierten Bereichen (AOI, ROI) trägt hierzu bei.

Die vorgeschlagene optische Datenübertragung hat im Vergleich zu einer elektrischen Datenübertragung in einem Bussystem den Vorteil, dass man nicht gegen einen Abschlusswiderstand, von z.B. 50 Ohm oder 75 Ohm, konstant treiben muss. An einem Abschlusswiderstand fällt eine kontinuierliche Verlustleistung ab. Bei optimierten Platinen kann der größte Anteil der Verlustleistung genau an diesem Abschlusswiderstand anfallen.

Bei einer optischen Datenübertragung können auch mit getrennten Wellenlängen auf einer optischen Faser mehrere optische digitale Übertragungsstrecken gebildet werden, die komplett störungsfrei nebeneinander bestehen. Eine Trennung der Übertragungsstrecken ist dann mit einem Strahlteiler, z.B. dichroitischen Strahlteilern, oder auch normalen Strahlteilern und einem Farbfilter als Bandpass oder mit Interferenzbandpassfilter möglich. Je nach Fasertyp sind unterschiedliche spektrale Bereiche (Wellenlängenbereiche) auf einer optischen Faser übertragbar. Bei Monomode-Fasern umfasst die Bandbreite fast eine Oktave, also knapp einen Faktor 2 in der Frequenz/Wellenlänge. Bei Low-Mode-Fasern oder Multimode Fasern ist dieses Verhältnis eher noch günstiger. Vorteilhafterweise sollten die Trägerfrequenzen der Laser benachbarter Frequenzen um etwas mehr als die maximale Modulationsfrequenz auseinander liegen. Auch ein Wellenlängen-Multiplexing ist möglich.

Insbesondere kann eine Low-Mode-Faser zur Ausbildung einer optischen Übertragungsstrecke verwendet werden. Diese zeichnen sich durch eine einfache Einkopplung verglichen mit einer Single-Mode-Faser aus. Zwar ist die Dämpfung größer als bei einer Single-Mode-Faser, die Laufwege in Messgeräten, insbesondere in Koordinatenmessgeräten liegen jedoch bei maximal 100 Metern, so dass die Dämpfung nicht ins Gewicht fällt. Neben der oben beschriebenen Übertragung von den digitalen Signalen kann dann auch ein analoges Signal übertragen werden, dass in einem anderen Wellenlängenbereich liegt. Ein Beispiel wäre z.B. das Signal oder das Beleuchtungslicht für einen chromatischen Weisslichtsensor. Hier könnte man im sichtbaren Spektralbereich mit diesem Sensor messen. Im nahen Infrarotbereich könnte dann noch eine ein- oder mehrkanalige Datenübertragung von digitalen Daten stattfinden wie voranstehend ausgeführt wurde.

Die auf der optischen Übertragungsstrecke zu übertragenden Daten können auch Steuerdaten der Maschine sein, so dass neben den Daten optischer Sensoren auch die digitalisierten Daten von Encodern, Maßstäben, ein Zeitsignal oder die Signale von taktilen Sensoren übertragen werden. Diese Kommunikationsdaten können auch in zwei Richtungen übertragen werden, also von einer Auswerteeinheit bis zum Sensor, oder von dem Sensor bis zu der Auswerteeinheit. Durch das Multiplexing der Wellenlänge ist es auch möglich, dass einige Wellenlängen eine Datenübertragung in beide Richtungen leisten, andere nur in einer Richtung, wie z.B. vorzugsweise von dem Sensor zu der Auswerteeinheit.

Insbesondere bei der Übertragung mehrerer Wellenlängen kann innerhalb einer Systemkomponenten auch ein weiteres Signal mit einer weiteren Wellenlänge auf die optische Übertragungsstrecke zusätzlich eingekoppelt werden und natürlich auch die relevante Wellenlänge für diese Systemkomponente ausgekoppelt werden. Ein Beispiel hierfür könnte ein Encoder bzw. der komplette Antrieb für eine Achse des Messgeräts sein.

In dem Messgerät kann in der optischen Übertragungsstrecke auch Drehübertrager eingebaut sein, so z.B. in dem genannten RDS als Dreh-Schwenk-Gelenk. Für einen verlustarmen bzw. dämpfungsarmen Drehübertrager ist die Anordnung auf der entsprechenden Drehachse besonders vorteilhaft für eine effiziente optische Kopplung. Der Drehübertrager auf der Achse profitiert dann auch von den überlagerten Wellenlängen, wenn mehr Kanäle bzw. mehr Datenvolumen übertragen werden muss, da nur einen Übertrager pro Drehachse auf der Achse positioniert werden kann.

Eine sogenannte ID-Verkabelung ist typischerweise mit zwei Übertragungsstrecken ausgeführt. Hier können die sich in dem Koordinatenmessgerät befindlichen Systemkomponenten entweder über einen Widerstand, eine Kombination aus Widerstand und Schutzdiode oder über sogenannte ID-Chips eindeutig identifiziert werden. Diese Übertragungsstrecken können beibehalten werden, oder der im Folgenden vorgeschlagenen Übertragungsstrecke über eine Lichtleitfaser bzw. ein Lichtwellenleiter zugeschlagen werden.

Die Höhe der zweiten Spannung kann bzw. sollte sich an den Erfordernissen der Logikbausteine orientieren. So sind zum Beispiel 2 Volt, 2,5 Volt, 5 Volt, 12 Volt, 15 Volt oder 24 Volt möglich. Da die Logikbausteine meist einen gewissen Eingangsspannungsbereich vertragen, kann die Versorgungsspannung bzw. die zweite Spannung etwas höher gewählt werden, um Leitungsverluste auf dem Weg von der Spannungsquelle bis zu dem Logikbaustein auszugleichen. Im Falle von zwei elektrischen Übertragungsstrecken können diese bspw. zum einen mit Masse und zum zweiten bspw. mit 5 V belegt sein. Grundsätzlich ist es auch möglich, dass die zweite Spannung als symmetrische Spannung bereitgestellt wird. In diesem Fall sind drei elektrische Übertragungsstrecken vorgesehen, wobei eine als Masse und die beiden anderen jeweils mit + 5 V bzw. 5 V belegt sind.

Die eingangs genannte Aufgabe wird daher vollkommen gelöst.

Gemäß einer weiteren Ausgestaltung der Erfindung kann vorgesehen sein, dass drei elektrische Übertragungsstrecken zum Übertragen der ersten elektrischen Spannung zwischen der ersten Systemkomponente und der zweiten Systemkomponente bereitgestellt werden, und dass die erste elektrische Spannung als eine symmetrische Spannung übertragen wird.

Somit sind auch bezüglich der ersten Spannung bezüglich der entsprechenden elektrischen Schnittstelle eine Übertragung durch drei elektrische Übertragungsstrecken möglich. Es besteht somit die Option einer einfachen Spannungsversorgung mittels zweier elektrischer Übertragungsstrecken oder einer symmetrischen Spannungsversorgung über drei elektrische Übertragungsstrecken, wie oben beschrieben. Über die Trennung zwischen Leistungsverbrauchern, wird vor dem Sensor und weiteren Leistungsverbrauchern, bspw. Antrieben, auf der einen Seite und Logikschaltungen und auf der anderen Seite soll eine gegenseitige Beeinflussung, wie etwa ein Übersprechen verhindert und die elektromagnetische Verträglichkeit (EMV) verbessert werden. Dies gilt insbesondere für die Beeinflussung von Notschaltungen durch Leistungsverbraucher.

In einer weiteren Ausgestaltung kann vorgesehen sein, dass die mindestens eine Logikschaltung zumindest mittelbar mit der ersten Spannung versorgt wird.

Mit geeigneten Filter- und Schutzschaltungen, die bspw. auch in Form integrierter Bausteine ausgeführt sein können, kann auf eine Trennung zwischen einem Netz mit der ersten Spannung und einem Netz mit der zweiten Spannung ggf. verzichtet werden. Bis zur Minimierung einer Verlustleistung an den Logikbausteinen können bspw. Gleichstromwandler eingesetzt werden.

Insofern kann in einer weiteren Ausgestaltung vorgesehen werden, dass die erste Spannung mittels eines Gleichstromwandlers in eine Betriebspannung der mindestens einen Logikschaltung umgesetzt wird.

Grundsätzlich kann des Weiteren vorgesehen sein, dass weitere Leistungsverbraucher mit der ersten Spannung versorgt werden.

Neben dem Sensor können somit auch wie bereits voranstehend ausgeführt wurde, weitere Leistungsverbraucher, wie bspw. Antriebe, Beleuchtungseinrichtungen usw. mit der ersten Spannung versorgt werden.

In einer weiteren Ausgestaltung kann vorgesehen sein, dass drei weitere elektrische Übertragungsstrecken zum Übertragen einer zweiten elektrischen Spannung zwischen der ersten Systemkomponente und der zweiten Systemkomponente bereitgestellt werden, und dass die zweite elektrische Spannung mit einer symmetrischen Spannung übertragen wird.

Wie beschrieben besteht auch für das elektrische Netz zum Übertragen der zweiten elektrischen Spannung die Möglichkeit, in der Schnittstellenanordnung drei weitere elektrische Übertragungsstrecken vorzusehen, und die zweite Spannung als symmetrische Spannung zu übertragen. In diesem Fall ist eine elektrische Übertragungsstrecke mit Masse, eine weitere mit der positiv und eine dritte mit der negativ anliegenden Spannung belegt.

In einer weiteren Ausgestaltung kann vorgesehen sein, dass mittels der Lichtwellenleiter der mindestens einen optischen Schnittstelle mehrere Signale parallel übertragen werden.

Bei einer gleichzeitigen Parallelübertragung ist darauf zu achten, dass keine Überlagerung und Störung, parallele Übertragungsstrecken in derselben Lichtleitfaser bzw. demselben Lichtwellenleiter auftritt. Etwaige Treiberbausteine zum Einkoppeln eines digitalen Messdatensignals in die Lichtwellenleiter sind somit mit geeigneten Übertragungswellenlängen auszustatten, die eine Parallelübertragung und mehrerer Datensignale über eine Lichtwellenleiter ermöglichen.

Schätzungsweise werden als Lichtwellenleiter sogenannte Single-Mode-Fasern verwendet. In diesen Fasern können digitale Signale zu mehreren Lasern mit unterschiedlichen Frequenzen parallel übertragen werden. Anstelle von Lasern sind natürlich auch modulierte Dioden verwendbar. Durch die Überlagerung der unterschiedlichen Wellenlängen bzw. Frequenzen kann die hohe Übertragungsbandbreite der Lichtwellenleiter gleich mehrfach parallel genutzt werden. Dadurch ist es zum Beispiel möglich, die Daten mehrerer Sensoren parallel zu übertragen. Ferner können auf einem weiteren Kanal Steuerdaten der Maschine übertragen werden. So können z.B. auf dieser Leitung die Daten von Triggern oder Synchronisationssignale, einem Control-Area-Network (CAN)-Bus oder auch das Identifikationssignal mit übertragen werden. Dadurch ist es möglich, bei einer Erhöhung der Übertragungskapazität für die Messdaten eines Sensors zusätzlich auch noch Steuerungsdaten des Systems auf ein und derselben Leitung zu übertragen. Auf diese Weise können mittels einer optischen Übertragungsstrecke mit einer Wellenlänge Datenmengen übertragen werden, die sonst etwa zehn bis hundert elektrische Übertragungsstrecken bzw. Leitungen erfordern würden. Insbesondere bei mehr als einem Sensor, insbesondere einem taktilen Sensor und einem optischen Sensor, kann sich dieses Verhältnis noch weiter erhöhen.

In einer weiteren Ausgestaltung kann vorgesehen sein, dass ein Synchronisationssignal zwischen der ersten Systemkomponente und der zweiten Systemkomponente mittels der Lichtwellenleiter der mindestens einen optischen Schnittstelle übertragen wird.

Alternativ kann selbstverständlich auch eine elektrische Übertragungsstrecke zur Übertragung des Synchronisationssignals verwendet werden.

Mit dem Synchronisationssignal ist ein Zeit-Synchronisations- oder Triggersignal zu verstehen, dass die einzelnen Elemente des Koordinatenmessgeräts zeitlich synchronisiert. Auf diese Weise lassen sich Messungen der Sensoren mit den Positionen eines Trägersystems bzw. Kinematik des Koordinatenmessgeräts abgleichen.

In einer weiteren Ausgestaltung kann vorgesehen sein, dass das Identifikationssignal zum Identifizieren einer Systemkomponente zwischen der ersten Systemkomponente und der zweiten Systemkomponente mittels der Lichtwellenleiter der mindestens einen optischen Schnittstelle übertragen wird.

Wie bereits voranstehend ausgeführt wurde, kann somit eine elektrische Übertragungsstrecke eingespart werden. In diesem Fall muss dann der entsprechende ID-Chip der jeweiligen Systemkomponente oder der entsprechende Widerstand ausgelesen werden und die Datei über eine entsprechende Ankopplung für die Lichtleiter bereitgestellt werden.

Durch die Übertragung der relevanten Daten ausschließlich über eine optische Übertragungsstrecke kann eine galvanische Trennung dieser Datenübertragung von der Leistungsversorgung auf der elektrischen Übertragungsstrecke umgesetzt werden. Hierdurch wird die EMV-Sicherheit erhöht und der notwendige Prüfungsaufwand gesenkt. Des Weiteren ermöglicht eine Trennung der elektrischen Übertragungsstrecke in ein Netz mit einer ersten Spannung und ein Netz mit einer zweiten Spannung die Vermeidung von Problemen, die aus der Reihenfolge resultieren können, wie an den Wechselschnittstellen die elektrischen Kontakte geschlossen werden. Benutzt man ein Netz oder zumindest einen gleichen Massebezug, kann es vorkommen, dass ein kurzzeitiges Übersprechen von der Leistungsversorgung auf die Versorgung der Logikschaltungen es zu Schäden im System in Logikschaltungen kommen kann. Die vorgeschlagene Trennung vermeidet diese Probleme.

Alternativ ist es möglich, dass der Treiberbaustein für die Versorgung des Lichtleiterkabels vom Sensor gesehen erst hinter der ersten Wechselschnittstelle angeordnet ist. Auf diese Weise kann der Sensor auf einem sehr kurzen Datenweg die digitalen Daten elektrisch übergeben. So wird vermieden, dass der Sensor, mit der falschen Wellenlänge in den Lichtwellenleiter sendet. Ferner sind elektrische Kontakte typischerweise robuster gegen Staub und Dreck in Produktionsumgebungen. Der Sensorkopf ist diesen Bedingungen noch am stärksten und unmittelbar ausgesetzt. Für die Datenübertragung in kontinuierlichen Drehachsen und zur Überbrückung der meist unvermeidlichen Wechselschnittstellen in Koordinatenmessgeräten kann im Prinzip dieselbe Technologie verwendet werden. Für eine bevorzugte Ausgestaltung wird vor das Ende der Lichtleitfaser eine GRIN-Linse gesetzt. Diese Linse hat die Aufgabe, das divergent aus der Faser austretende Lichtbündel zu kollimieren. Die Wechselschnittstellen im KMG sind sehr robust und reproduzierbar ausgeführt. Dadurch ist der Luftspalt zwischen den beiden Teilen der Schnittstelle und auch deren relative Lage zueinander sehr gut bestimmt. In dem gegenüberliegenden Teil an der Schnittstelle ist dann ebenfalls wieder eine GRIN-Linse angeordnet, die zur Einkopplung des Lichts in eine nachfolgende weitere Faser dient. Durch das parallele Lichtbündel im Spalt kann der Spalt recht einfach und ohne große Verluste überbrückt werden. Zur Verminderung der Verluste bei der Ein- und Auskopplung des Lichts an den Faserenden und an den Linsenflächen können diese entsprechend optisch vergütet sein. Typischerweise werden Antireflexbeschichtungen eingesetzt, oder die Faserenden leicht schräg geschnitten oder die Faser oder einem leichten Winkel positioniert, um Einflüsse durch einfach- und mehrfach Reflexionen zu vermeiden.

Handelt es sich bei der Trennstelle um eine Drehachse muss der beschriebene Kopplungsmechanismus möglichst genau axial angeordnet sein, um eine möglichst effiziente Kopplung zu erreichen. Ansonsten bleiben die weiteren Ausführungen des letzten Abschnitts gültig. Drehachsen haben die Besonderheit, dass nur eine solche Anordnung auf der Achse montiert werden kann. Eine serielle Anordnung mehrerer solcher Koppelstellen entlang der Drehachse, die sich kontinuierlich um ein Vielfaches von 360 Grad drehen soll, ist technisch nicht möglich, da bereits an der ersten Trennstelle alle außeraxialen Leitungen ebenfalls getrennt werden müssen. Durch die Verdrehung würde die Einkopplung dann aber zumindest sehr stark moduliert, wenn nicht sogar unterbrochen. Aus diesem Grund wird vorgeschlagen, über eine zentrale Faserverbindung, d.h. eine koaxial zu einer Rotationsachse verlaufende Faserverbindung mit den entsprechenden Koppellinsen dann mehrere Wellenlängen und damit mehrere Datenkanäle parallel zu übertragen. Diese Lösung ist besonders bevorzugt, da sie sehr kompakt und funktionssicher ausgeführt werden kann. Alternativ kann man um diesen einen zentralen Kanal auch mit so genannten Ringkopplern arbeiten. Das limitiert die Anzahl der Schnittstellen, die auf der Übertragungsstrecke liegen, deutlich. Für eine Kompensation der Übertragungsverluste müssen gegebenenfalls Signalverstärker in die Übertragungsstrecke eingebaut werden. Dieser zusätzliche Aufwand kann mit der oben beschriebenen Lösung weit gehend vermieden werden. Im Vergleich zu Standardapplikation mit Lichtleitfasern werden hier optische Koppelglieder verwendet, die keine unmittelbare mechanische Verbindung zwischen den beiden Faserteilen bzw. den eingesetzten Linsen benötigen.

Wenn einmal dieses Verkabelungssystem mit Lichtleitfasern für die Sensoren eingeführt ist, kann das entsprechende System auch für die weitere Technik im Koordinatenmessgerät eingesetzt werden. So können zum Beispiel unmittelbar an den Motoren die passenden Motortreiberbausteine angesetzt werden und diese mit der Leistungsversorgung, gegebenenfalls der Spannungsversorgung für die Logik, gegebenenfalls der ID Verkabelung und dem Lichtwellenleiter zur Datenübertragung verbunden werden. Auf dem Lichtwellenleiter können dann die Steuer- bzw. Positionierbefehle für den Motor übertragen werden. In umgekehrter Richtung kann dann das echte Positionssignal, das beispielsweise von einem Messsystem oder Encoder gelesen wird, von der Motorbaugruppe zu einer Regelungseinheit übertragen werden. Da diese Übertragung auch als Bus-Übertragung ausgeführt werden kann, können so die unterschiedlichen Baugruppen bzw. Systemkomponenten auf ein und derselben Leitung hintereinander kaskadiert werden. Im Vergleich zur heutigen Maschinenverkabelung kann dadurch der Systemaufwand erheblich reduziert werden, da nun nicht mehr jeder Motor getrennt mit Kabeln angeschlossen werden muss. Der Vorteil ist, dass bei weniger Kabeln die Leitungen zur Leistungsversorgung mit einem höheren Querschnitt und damit geringeren Verlusten ausgeführt werden können. Dies kann dazu benutzt werden, dass die Maschine bei nominal gleicher Spannungsversorgung mit höherer Leistung bzw. höhere Funktionssicherheit betrieben werden kann, da am Motor selber aufgrund verringerter Kabelverluste mehr Leistung ankommt. In Summe kann der Gesamtquerschnitt der Kabel im Gerät reduziert werden und zudem noch die Funktionssicherheit des gesamten Systems erhöht werden. Funktional bedeutet der reduzierte Aufwand an Kabeln, dass die Masse des Gerätes reduziert werden kann und damit entsprechend die Dynamik für den Messbetrieb erhöht werden kann.

Neben der rein optischen Kopplung über die Trennstellen hinweg ist natürlich auch eine Kopplung mit einem Empfänger möglich. Das vom Empfänger enthaltene Signal würde dann ein einen weiteren Sender gespeist, der eine weitere Lichtleitfaser versorgt. Je nach Länge der Übertragungsstrecke und der Verluste an den Trenn- und Übertragungsstellen kann allerdings eine Verstärkerstufe in dem optischen Lichtleiter gegebenenfalls benötigt werden.

Es versteht sich, dass alle voranstehend in Bezug auf das vorgeschlagene Verfahren ausgeführten Merkmale eines Koordinatenmessegeräts auch Merkmale des vorgeschlagenen Koordinatenmessgeräts sein können. Gleiches gilt für im Zusammenhang mit dem vorgeschlagenen Koordinatenmessgerät erläuterte Merkmale, die auch Merkmale des vorgeschlagenen Verfahrens bilden können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht eines Messgeräts,
- Fig. 2a: eine schematische Ausführungsform eines Messgeräts mit seinen Systemkomponenten und Schnittstellenanordnungen und einem Sensorkopf mit einem taktilen Sensor;
- Fig. 2b: eine schematische Darstellung des Messgeräts in Fig. 2a mit einem optischen Sensorkopf,
- Fig. 3: eine schematische Darstellung einer Ausführungsform einer ersten Systemkomponente, die über eine Schnittstellenanordnung mit einer zweiten Systemkomponente gekoppelt ist,
- Fig. 4: eine schematische Darstellung entlang einer Schnittlinie IV-IV in Fig. 3,
- Fig. 5: eine schematische Darstellung einer weiteren Ausführungsform einer ersten Systemkomponente, die über eine Schnittstellenanordnung mit einer zweiten Systemkomponente gekoppelt ist,
- Fig. 6: eine schematische Darstellung einer Ausführungsform eines Verfahrens zum Koppeln einer ersten Systemkomponente und einer zweiten Systemkomponente,
- Fig. 7: eine schematische Darstellung einer weiteren Ausführungsform eines Verfahrens zum Koppeln einer ersten Systemkomponente und einer zweiten Systemkomponente,
- Fig. 8: eine schematische Darstellung einer parallelen Übertragung mehrerer Signale über einen Lichtwellenleiter,
- Fig. 9: eine schematische Darstellung einer parallelen Übertragung mehrerer Signale über mehrere Lichtwellenleiter,
- Fig. 10: eine schematische Darstellung der Kopplung mehrerer Lichtwellenleiter mittels eines Prismas,
- Fig. 11a bis 11c: mögliche Ausführungsformen einer optischen Schnittstelleneinrichtung bzw. einer optischen Schnittstelle zwei einer ersten und einer zweiten Systemkomponente,
- Fig. 12a und 12b: mögliche Ausführungsformen der Kopplung eines Lichtwellenleiters mit einem optischen Koppelglied, und
- Fig. 13a bis 13d: mögliche Ausführungsformen einer elektrischen Schnittstelleneinrichtung bzw. einer elektrischen Schnittstelle.

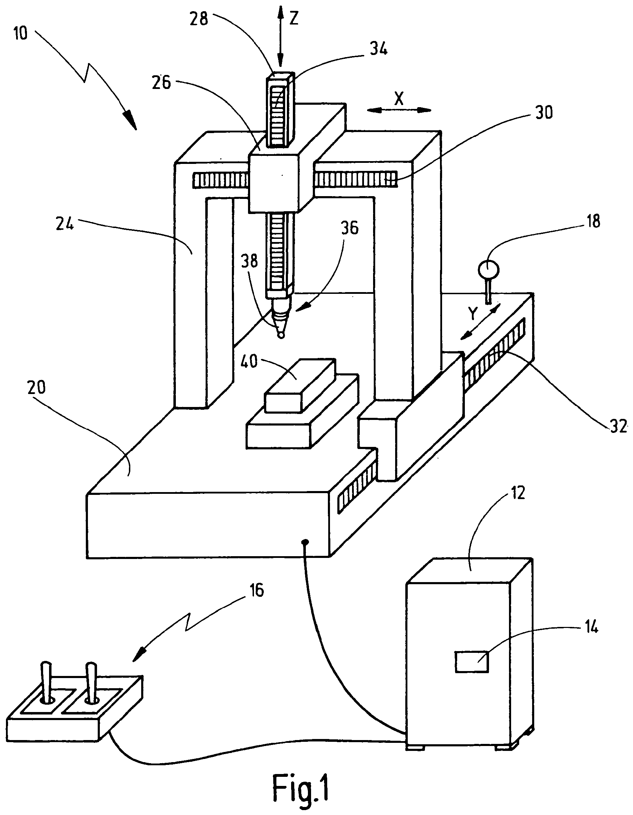

Fig. 1 zeigt ein Messgerät, dass als Koordinatenmessgerät 10 ausgebildet ist. Grundsätzlich kann das Messgerät auch Bestandteil einer Werkzeug- bzw. Fertigungsmaschine sein. Nachfolgend wird die Erfindung jedoch am Beispiel eines Koordinatenmessgeräts 10 beschrieben.

Das Koordinatenmessgerät 10 weist eine Steuerungseinheit 12 zum Steuern des Koordinatenmessgeräts 10 auf. Die Steuerungseinheit 12 weist eine Recheneinheit 14, beispielsweise einen Computer, auf.

Die Steuerungseinheit 12 ist lediglich schematisch als Block dargestellt, grundsätzlich kann die Steuerungseinheit 12 alle zur Steuerung des Koordinatenmessgeräts 10 notwendigen Elemente, beispielsweise Tastaturen, Monitore oder eine Bedienkonsole 16, aufweisen. Des Weiteren umfasst die Steuerungseinheit 12 auch Ausgabemittel, um die durch das Koordinatenmessgerät 10 gewonnenen Daten in geeigneter Form, beispielsweise elektronisch oder in Papierform, auszugeben. Obwohl das Koordinatenmessgerät 10 mittels der Bedienkonsole 16 auch manuell bedient werden kann, ist die Steuerungseinheit 12 auch dazu in der Lage, Mess- und Kalibriervorgänge automatisiert durchzuführen.

Des Weiteren kann das Koordinatenmessgerät 10 eine Einmesskugel 18 aufweisen. Die Einmesskugel 18 ist auf einer Grundplatte 20 des Koordinatenmessgeräts 12 angeordnet. Die Einmesskugel 18 dient zum Kalibrieren des Koordinatenmessgeräts 10, ein solches Kalibrationsverfahren ist beispielsweise in der Druckschrift EP 1 051 596 B1 beschrieben. Dieses dient zum Bestimmen von Korrekturparametern des Koordinatenmessgeräts 10, beispielsweise von einer Nachgiebigkeitsmatrix.

An der Grundplatte 20 ist in der dargestellten Ausführungsform ein Portal 24 vorgesehen, das an der Grundplatte 22 entlang einer ersten Achse (Y) verschiebbar ist. An dem Portal 24 wiederum ist ein Schlitten 26 vorgesehen, der entlang dem Portal 24 in einer zweiten Richtung (X) verschiebbar ist. An dem Schlitten 26 ist eine Pinole 28 vorgesehen, die entlang dem Schlitten 26 in eine dritte Richtung (Z) verschiebbar ist. Die drei Richtungen (X, Y, Z) stehen jeweils senkrecht aufeinander und bilden die Achsen eines absoluten Koordinatensystems (X, Y, Z).

An dem Portal 24 ist eine Skala 30 in X-Richtung, an der Grundplatte 22 eine Skala 32 in Y-Richtung und an der Pinole 28 eine Skala 34 in Z-Richtung vorgesehen. Die Skalen 30, 32, 34 dienen dazu, die Position eines an der Pinole 28 angebrachten Sensors 36 auszulesen. Dazu können die Skalen 30, 32, 34 derart ausgebildet sein, dass ein manuelles Ablesen einer jeweiligen Koordinate möglich ist, insbesondere sind die Skalen 30, 32, 34 jedoch derart ausgebildet, dass eine jeweilige Koordinate durch eine entsprechende Erfassungseinrichtung (nicht dargestellt) erfasst und elektronisch an die Steuerungseinheit 14 übermittelt wird. Die Skalen 30, 32, 34 dienen somit als Lagesensoren zur Erfassung der Lage des Sensors 36.

Die in Fig. 1 dargestellte Ausführungsform mit einem Portal 24 ist lediglich beispielhaft zu verstehen. Grundsätzlich kann die vorliegende Erfindung auch mit allen anderen Arten von Aufbauten des Trägersystems verwendet werden, beispielsweise neben Portalaufbauten wie in den PRISMO-, CONTURA-, ACCURA und UMC-Baureihen der Anmelderin auch Ständeraufbauten, Armaufbauten und Horizontalarmaufbauten wie in den PRO- und CARMET-Baureihen der Anmelderin, Tischaufbauten wie in den Surfcom- und Rondcom-Baureihen der Anmelderin und auch Einzelplatzaufbauten wie in den F25- und O-INSPECT-Baureihen der Anmelderin oder auch CT-Aufbauten wie in der Metrotom-Baureihe der Anmelderin. Darüber hinaus ist allgemein ein Einsatz zusammen mit Roboter-gestützten Trägersystemen denkbar.

Der an der Pinole 28 angebrachte Sensor 36 weist in der dargestellten Ausführungsform einen Taster bzw. eine Tastspitze 38 auf, die auslenkbar gelagert ist und zur Antastung eines zu vermessenden Objekts 40 dient. Grundsätzlich kann es sich bei dem Sensor 36 jedoch auch um einen optischen Sensor handeln. Letztlich kann es sich bei dem Sensor 36 auch um einen Sensor handeln, der ein kombiniertes taktiles und optisches Messen ermöglicht.

Das zu vermessende Objekt 40 ist auf der Grundplatte 22 angeordnet und kann so durch Verfahren des Portals 24, des Schlittens 26 und der Pinole 28 angetastet und vermessen werden.

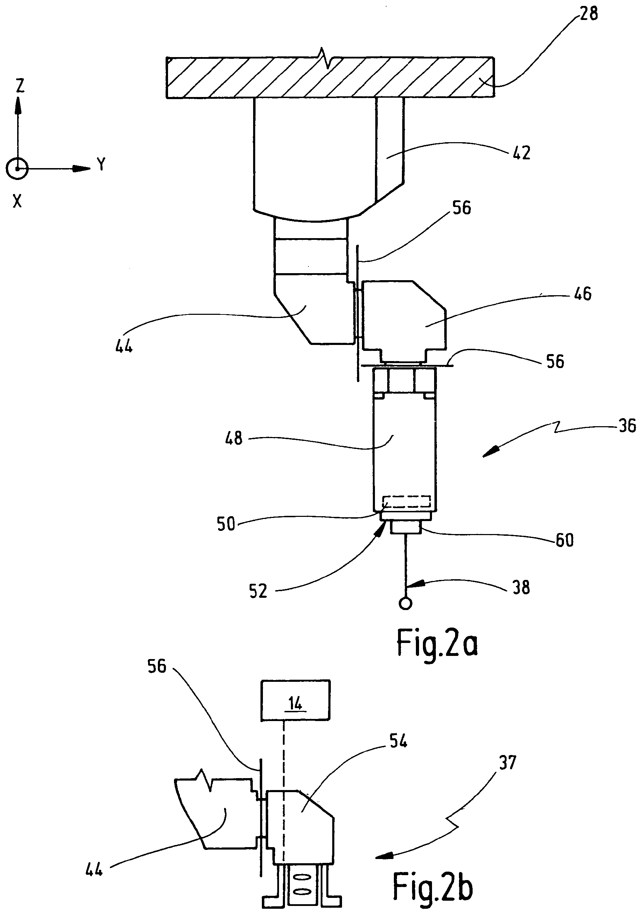

Fig. 2a zeigt eine schematische Ansicht verschiedener Systemkomponenten des Koordinatenmessgeräts 10. Bei einer Systemkomponente kann es sich beispielsweise um ein Element des Trägersystems, wie in der dargestellten Ausführungsform etwa die Pinole 28, oder um eine weitere Befestigungsvorrichtung 42 handeln. Des Weiteren kann eine Systemkomponente von einem Dreh-Schwenk-Gelenk (DSG) 44 oder einem Adapter 46 gebildet werden. Letztlich bildet auch ein Sensorkopf 48 eine Systemkomponente.

An der Pinole 28 ist in der Regel zunächst eine Befestigungsvorrichtung 42 vorgesehen, an der ein Dreh-Schwenk-Gelenk (DSG) 44 vorgesehen ist. Das DSG 44 dient dazu, den Sensor 36 in eine beliebige Richtung auszurichten, um den Taststift 38 geeignet an dem zu vermessenden Objekt 40 positionieren zu können. An dem DSG 44 ist ein Adapter 46 vorgesehen, der dazu dient, einen Übergang von dem DSG 44 zu einem Sensorkopf 48 bereitzustellen, um zu ermöglichen, verschiedene Sensoren 36 bzw. Sensorköpfe 48 mit demselben DSG 44 verwenden zu können.

In dem Sensorkopf 48 ist eine Tasteraufnahme 50 vorgesehen, die einen Taststiftteller 52 hält. An dem Taststiftteller 52 ist dann der eigentliche Taster 38 angeordnet. Der Taststiftteller 52 ist in der Tasteraufnahme 50 gekoppelt durch entsprechende Messaufnehmer (nicht dargestellt) angeordnet, die eine Auslenkung des Tasters 38 bzw. des Taststifttellers 52 erfassen und an die Steuerungseinheit 14 des Koordinatenmessgeräts 12 übermitteln.

Fig. 2b zeigt eine mögliche Anordnung für den Fall, dass ein optischer Sensor 37 verwendet wird. Von der Pinole 28 bis zu dem DSG 44 gleicht der Aufbau dem in Fig. 2a beschriebenen. An die DSG 44 schließt sich dann allerdings direkt der optische Sensor 37 an, der beispielsweise durch ein Kameramodul 54 gebildet ist.

Entsprechend kann auch zwischen dem Kameramodul 54 und dem Drehschwenkgelenk 44 eine Schnittstellenanordnung 56 gebildet sein. Hierbei bilden dann das Kameramodul 54 eine Systemkomponente und das Drehschwenkgelenk 44 eine Systemkomponente.

In den Fig. 2a und 2b ist der Aufbau eines Koordinatenmessgeräts 10 schematisch dargestellt. Wie ersichtlich ist, können sowohl Elemente eines Trägersystems, wie beispielsweise die Pinole 28, die Befestigungsvorrichtung 42, das Dreh-Schwenk-Gelenk 44 eine Systemkomponente bilden, ebenso wie der Adapter 46 und ein Sensorkopf 48 bzw. 54.

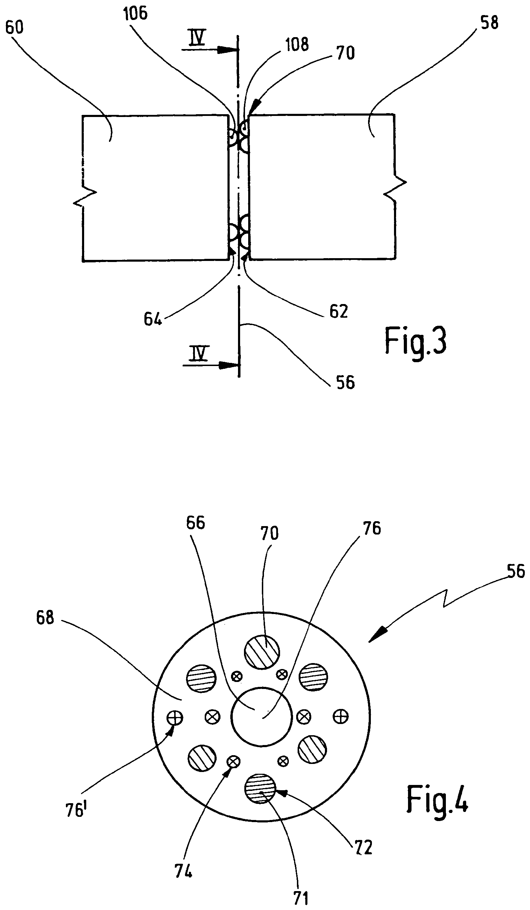

In Fig. 3 ist schematisch eine Anordnung einer ersten Systemkomponente 58 und einer zweiten Systemkomponente 60 dargestellt. Die erste Systemkomponente 58 und die zweite Systemkomponente 60 sind an einer Schnittstellenanordnung 56 miteinander verbunden. Hierzu weist die erste Systemkomponente 58 eine erste Wechselfläche 62 und die zweite Systemkomponente 60 eine zweite Wechselfläche 64 auf. Unter einer "Wechselfläche" wird dabei diejenige Fläche einer Systemkomponente 58, 60 verstanden, die mit einer jeweils anderen Systemkomponente 58, 60 verbunden wird.

In Fig. 4 ist ein Querschnitt entlang einer Linie IV-IV in Fig. 3 dargestellt. Die Fig. 4 gibt somit schematisch die Anordnung einzelner Schnittstellen in der Schnittstellenanordnung 56 wieder.

Die Schnittstellenanordnung 56 weist einen Zentralbereich 66 und einen den Zentralbereich 66 umgebenden Außenbereich 68 auf. Der Zentralbereich 66 kann dabei frei ausgebildet sein. Unter "frei" wird dabei verstanden, dass eine jeweilige Wechselfläche 62, 64 in dem Zentralbereich eine Öffnung aufweist, durch die Licht hindurchtreten kann.

Grundsätzlich kann in dem Zentralbereich auch eine Blende angeordnet sein. Beispielsweise kann diese Blende als Irisblende ausgeführt sein, um den freien Zentralbereich 66 bei Bedarf verschließen zu können. Selbstverständlich kann darüber hinaus die Blende auch dazu verwendet werden, den Durchmesser eines durch den Zentralbereich 66 tretenden Strahlenbündels zu beschränken, wie dies allgemein aus der Optik bekannt ist. Entsprechend kann der Zentralbereich 66 einen Halter (nicht dargestellt) für eine derartige Blende aufweisen. Auch in einen derartigen Halter können beispielsweise Schnittstellen für Lichtwellenleiter, also optische Schnittstellen, oder eine elektrische Schnittstelle integriert sein.

In der dargestellten Ausführungsform ist der Zentralbereich 66 kreisförmig ausgebildet. Der Außenbereich 68 weist eine Ringform auf und umgibt den Zentralbereich 66. Darüber hinaus sind selbstverständlich auch andere Formen des Zentralbereichs 66 und des Außenbereichs 68 denkbar. Insbesondere kann aber beispielsweise auch vorgesehen sein, dass der Zentralbereich 66 kreisförmig ausgebildet ist, wobei der Außenbereich 68 aber außen eine rechteckige Kontur aufweist.

Im Außenbereich 68 sind darüber hinaus Halteelemente 71 eines Dreipunktlagers 70 angeordnet. Die drei Halteelemente 71 sind jeweils in einem Winkel von 120° zueinander über den Hof eines Außenbereichs 68 beabstandet. Bei der Halteeinrichtung 72 kann es sich beispielsweise um eine elektromagnetische Halteeinrichtung handeln. Beispielsweise kann vorgesehen sein, dass in der ersten Systemkomponente 58 als Halteelemente 71 elektromagnetische Spulen angeordnet sind und in der zweiten Systemkomponente 60 entsprechend Flussführungselemente bzw. Ankerplatten vorgesehen sind. Durch Betätigen elektromagnetischer Spulen in der ersten Systemkomponente 58 können somit die Ankerplatten der zweiten Systemkomponente 60 angezogen werden und die Systemkomponenten 58, 60 in dem Dreipunktlager 70 ineinander gedrückt werden.

Darüber hinaus ist in dem Außenbereich 68 mindestens eine elektrische Schnittstelle bzw. Schnittstelleneinrichtung 74 angeordnet. In dem dargestellten Ausführungsbeispiel sind fünf elektrische Schnittstellen 74 rotationssymmetrisch in dem Außenbereich angeordnet. Selbstverständlich sind jedoch auch andere Arten von Anordnungen denkbar. Auf die genaue Ausgestaltung der elektrischen Schnittstellen 74 wird im Folgenden noch detaillierter eingegangen.

Des Weiteren ist in dem Außenbereich 68 mindestens eine weitere optische Schnittstelle bzw. Schnittstelleneinrichtung 76' angeordnet. Zunächst dient der freie Zentralbereich 66 als optische Schnittstelle bzw. Schnittstelleneinrichtung 76. Die darüber hinaus in dem Außenbereich 68 vorgesehenen weiteren optischen Schnittstellen 76 können beispielsweise durch Lichtwellenleiter bereitgestellt werden, wie im Folgenden noch detaillierter ausgeführt werden wird.

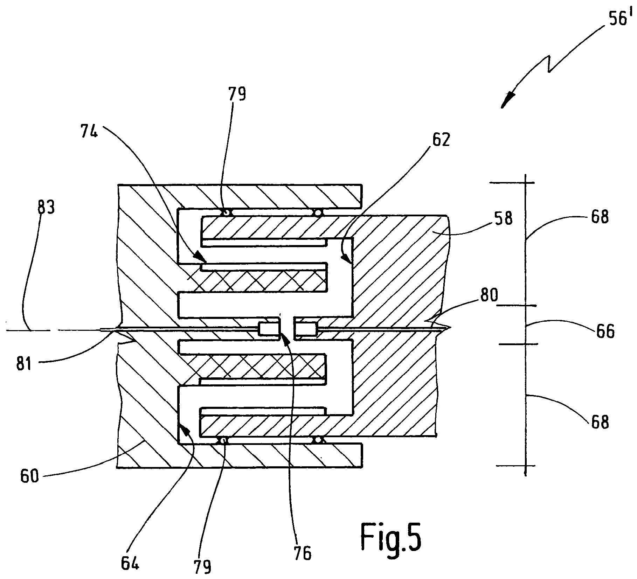

Fig. 5 zeigt eine schematische Darstellung einer weiteren Ausführungsform einer ersten Systemkomponente 58, die über eine Schnittstellenanordnung 56 mit einer zweiten Systemkomponente 60 gekoppelt ist.

Diese alternative Ausgestaltung einer Schnittstellenanordnung 56 wird mit 56' schematisch dargestellt. Sie kann insbesondere zum Einsatz in Drehachsen kommen, das heißt, wenn die erste Systemkomponente 58 und die zweite Systemkomponente 60 relativ zueinander Drehbewegungen ausführen.

Der Zentralbereich 66 und der Außenbereich 68 sind in dem dargestellten Querschnitt schematisch gekennzeichnet. Die optische Schnittstelle 76 ist in der vorgeschlagenen Ausführung in den Zentralbereich 66 geführt. Dies ermöglicht es, die Lichtwellenleiter 80, 81 der optischen Schnittstelle 76 koaxial zu einer Drehachse der ersten Systemkomponente 58 und der zweiten Systemkomponente 60 relativ zueinander anzuordnen. Die Drehachse ist mit einem Bezugszeichen 83 schematisch gekennzeichnet.

Auf diese Weise wird ein Übertragen des Lichts von dem Lichtwellenleiter 80 in den Lichtwellenleiter 81 bzw. umgekehrt über die optische Schnittstelle 76 hinweg einfach ermöglicht.

Die erste Systemkomponente 58 ist in der zweiten Systemkomponente 60 mittels mehrerer Lager 79 gelagert. Grundsätzlich ist es möglich, dass die Lager 79 Teil einer elektrischen Übertragungsstrecke sind. Beispielsweise kann über diese eine Masse geführt sein. Darüber hinaus kann die elektrische Schnittstelle 76 derart bereitgestellt sein, dass sie für derartige Drehverbindungen geeignet ist. Dies kann beispielsweise durch einen Schleifringkontakt der Fall sein. Alternativ ist es auch möglich, dass eine kontaktlose Übertragung beispielsweise über induktive Übertragung vorgesehen wird, um die elektrische Schnittstelle 74 bzw. eine der elektrischen Übertragungsstrecken der elektrischen Schnittstelle 74 bereitzustellen. Der Begriff "Übertragungsstrecke" ist somit nicht zwingend auf eine kontaktierende Verbindung zu lesen. Eine "Übertragungsstrecke" kann auch Abschnitte aufweisen, in denen ohne direkten Kontakt, das heißt kontaktlos, eine Übertragung stattfindet.

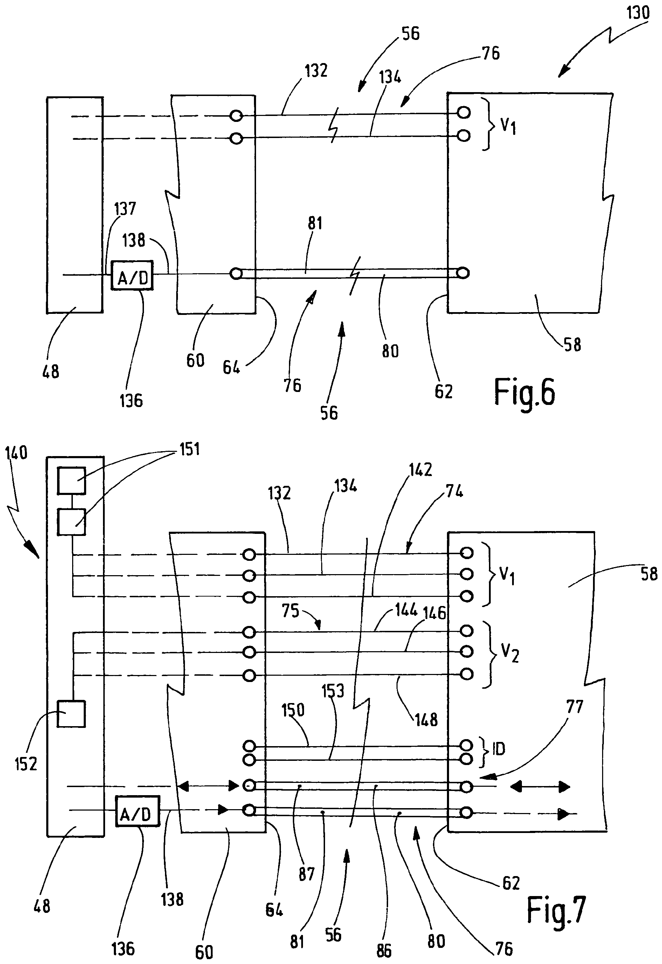

Fig. 6 zeigt schematisch eine Ausgestaltung des Verfahrens zum Koppeln der ersten Systemkomponente 58 und der zweiten Systemkomponente 60. Die Kopplung der ersten Systemkomponente 58 und der zweiten Systemkomponente 60 erfolgt dabei über die Schnittstellenanordnung 56, die in der Fig. 6 schematisch angedeutet ist. Gebildet wird eine elektrische Schnittstelle 74 und eine optische Schnittstelle 76. Die elektrische Schnittstelle 74 weist zwei elektrische Übertragungsstrecken 132, 134 auf, die eine erste Spannung V1 übertragen. Mit dieser ersten Spannung V1 wird der Sensor 48 versorgt.

Des Weiteren weist die optische Schnittstelle 76 zwei Lichtwellenleiter bzw. Lichtleitfasern 80, 81 auf, aus denen eine optische Übertragungsstrecke gebildet wird. Über diese werden Messdaten des Sensors 48 übertragen. Hierzu werden analoge Messsignale 137 des Sensors 48 mittels eines Analog-zu-Digital-Umsetzers 136 transformiert. Die so erhaltenen digitalen Messdatensignale 138 werden dann mittels der optischen Übertragungsstrecke von der zweiten Systemkomponente 60 zu der ersten Systemkomponente 58 über die Schnittstellenanordnung 56 hinweg übertragen. Alternativ oder kumulativ kann aber auch eine Übertragung des Messsignals 137 in analoger Form mittels der Lichtwellenleiter 80, 81 der optischen Schnittstelle 76 erfolgen.

In der Fig. 7 ist eine weitere Ausführungsform des erfindungsgemä-ßen Verfahrens zum Kuppeln zweier Systemkomponenten 58, 60 dargestellt. Entsprechend kann auch eine Ausgestaltung einer Ausführungsform des Koordinatenmessgeräts 10 bereitgestellt sein. Gleiche Elemente sind dabei mit gleichen Bezugszeichen gekennzeichnet und werden daher nicht erneut beschrieben.

Die elektrische Schnittstelle 74 ist mittels dreier elektrischer Übertragungsstrecken 132, 134, 142 bereitgestellt. Auf diese Weise kann die erste Spannung V1 als symmetrische Spannung übertragen werden. Die erste Spannung V1 dient zur Versorgung des Sensors 48 und weiterer Leistungsverbraucher 151.

Weiterhin ist eine zweite elektrische Schnittstelle 75 bereitgestellt, die ebenfalls mittels dreier elektrischer Übertragungsstrecken 144, 146, 148 gebildet ist. Mittels dieser wird eine zweite Spannung V2 übertragen. Mit der zweiten vorgesehen werden Logikbausteine 152 versorgt.

Des Weiteren sind zwei elektrische Übertragungsstrecken 150, 153 über die Schnittstellenanordnung 56 hinweg gebildet. Mittels dieser kann ein Identifikationssignal aus einer der Systemkomponenten 58, 60 von einer weiteren, hier nicht dargestellten Systemkomponente, des Koordinatenmessgeräts 10 ausgelesen und übertragen werden. Grundsätzlich kann aber auch nur eine der Übertragungsstrecken 150, 153 zusätzlich vorgesehen sein, wenn darüber hinaus eine der Übertragungsstrecken 144, 146, 148 bzw. 132, 134, 142 mitgenutzt wird.

Die erste optische Schnittstelle 76 ist in der dargestellten Ausführungsform unidirektional ausgebildet und dient zur Übertragung der digitalen Messdatensignale 138. Des Weiteren ist eine zweite optische Schnittstelle 77 bereitgestellt, die ebenfalls aus Lichtleitfasern bzw. Lichtwellenleitern 86, 87 gebildet ist. Diese ist bidirektional ausgebildet. Das heißt es können in beide Richtungen Signale übertragen werden. Die mittels der Lichtwellenleiter 86, 87 gebildete zweite optische Übertragungsstrecke kann somit zu einer Kommunikation mit dem mindestens einen Logikbaustein 152, zur Übertragung von Daten eines CAN-Bus, der Übertragung eines Synchronisationssignals des Koordinatenmessgeräts und anderer zum Betrieb des Koordinatenmessgeräts relevanter Daten genutzt werden.

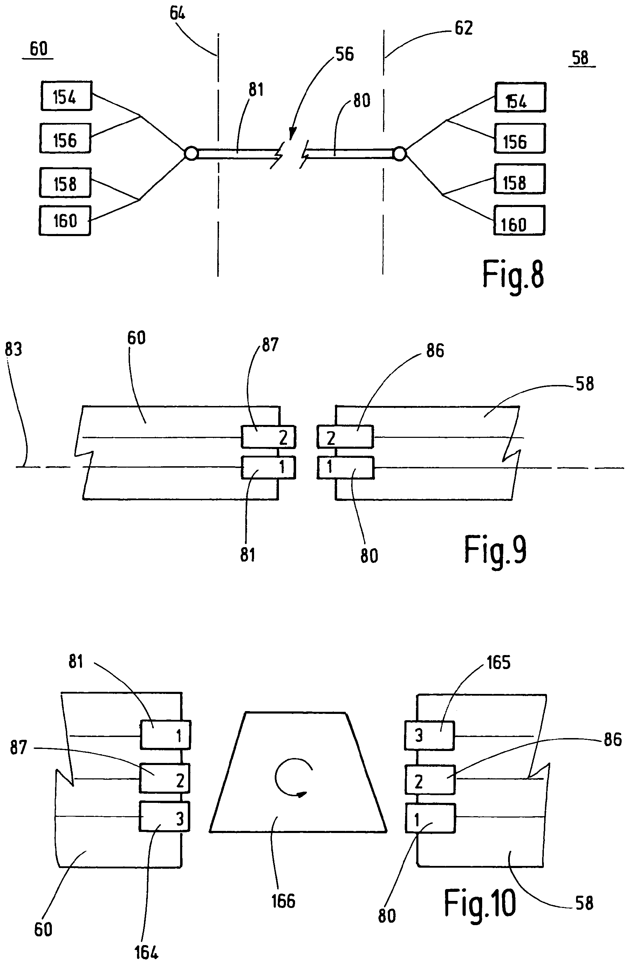

In der Fig. 8 ist schematisch dargestellt, wie mehrere verschiedene Datensignale parallel auf einer aus den Lichtwellenleitern 80, 81 gebildeten optischen Übertragungsstrecke über die Schnittstellenanordnung 56 hinweg übertragen werden können. Dazu ist für eine erste Wellenlänge jeder der Systemkomponenten 58, 60 ein erster Sender 154 und ein erster Empfänger 156 vorgesehen. Des Weiteren sind für eine zweite Wellenlänge ein zweiter Sender 158 und ein zweiter Empfänger 160 in jede der Systemkomponenten 58, 60 vorgesehen. Auf diese Weise wird es möglich, über die Lichtwellenleiter 80, 81 mittels zweier verschiedener Wellenlängen zwei verschiedene Datensignale zu übertragen.

Eine entsprechende Ausgestaltung ergibt sich selbstverständlich für die Parallelübertragung von drei oder mehr Datensignalen.

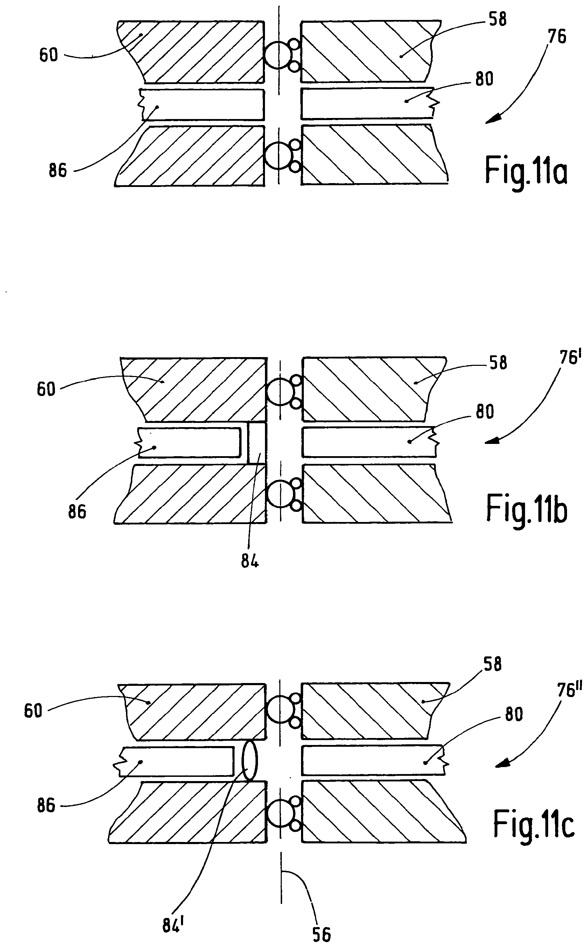

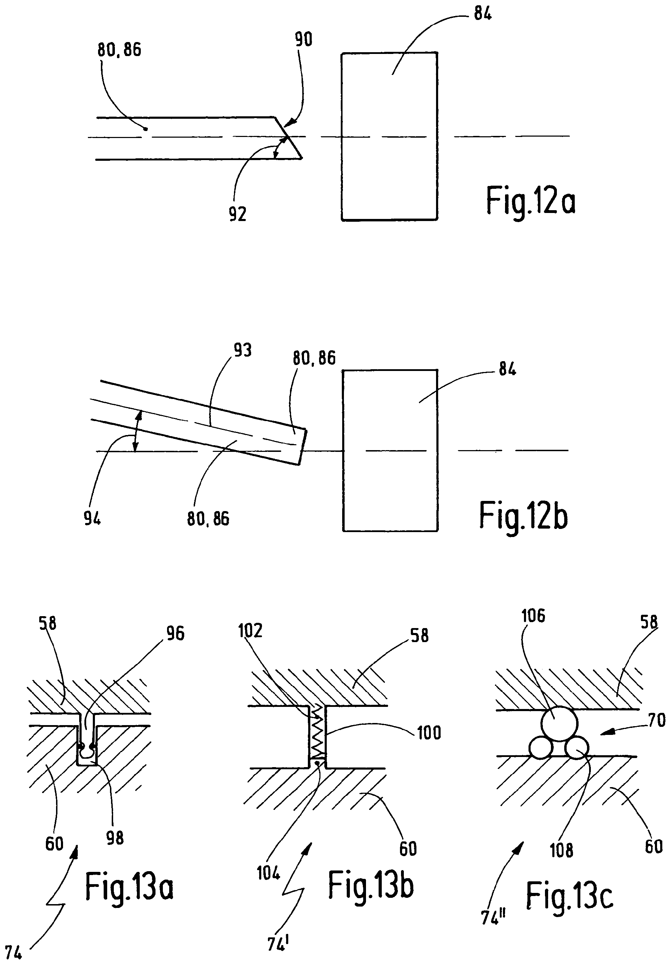

In der Fig. 9 ist schematisch dargestellt, wie es beispielhaft zwei Datensignale zwischen den Systemkomponenten 58, 60 übertragen werden können. Hierzu wird eine erste Übertragungsstrecke aus den Lichtwellenleitern 80, 81 und eine zweite Übertragungsstrecke aus den Lichtwellenleitern 86, 87 gebildet. Einer der Lichtwellenleiter kann dann auf der Drehachse bzw. Längsachse 83 angeordnet sein, die weiteren Lichtwellenleiter 86, 87 der zweiten Übertragungsstrecke sind entsprechend exzentrisch angeordnet. Die einander gegenüberliegenden Enden der Lichtwellenleiter 80, 81 bzw. 86, 87 können dann miteinander kommunizieren. Möglichkeiten, die Enden der Lichtwellenleiter 80, 81 bzw. 86, 87 möglichst verlustfrei miteinander zu koppeln, werden noch im Folgenden mit Blick auf die Figuren 11a bis 11c und 12a bis 12b eingehend erläutert.

In der Fig. 10 ist ein weiteres Beispiel dafür genannt, wie in dem dargestellten Beispiel drei optische Übertragungsstrecken auch in dem Fall, dass dies Systemkomponenten 58, 60 sich über die Schnittstellenanordnung 56 hinweg relativ zueinander verdrehen, miteinander gekoppelt werden können. Eine erste Übertragungsstrecke wird aus den Lichtwellenleitern 80, 81, eine zweite aus den Lichtwellenleiter, 86, 87 und eine dritte aus den Lichtwellenleitern 164, 165 gebildet.

Zur Kopplung wird hierbei ein Prisma 166 mit trapezförmigen Querschnitt verwendet.

Das Prisma 166 kann mittels eines Getriebes mit der ersten Systemkomponente 58 und mittels eines weiteren Getriebes mit der zweiten Systemkomponente 60 gekoppelt sein. Es ist dann in der Regel vorgesehen, dass bei einer Verdrehung der ersten Systemkomponente 58 zu der zweiten Systemkomponente 60 um einen Winkel α, das Prisma jeweils um einen Winkel von 0,5 α sowohl zu der ersten als auch der zweiten Systemkomponente 58, 60 verdreht wird. Dies wird über die Umsetzung des Getriebes und des weiteren Getriebes automatisch bewerkstelligt. Auf diese Weise ist es möglich, die optischen Übertragungsstrecken alle miteinander zu koppeln. Die Reihenfolge ist dann jedoch vertauscht, wie der in Fig. 10 zu entnehmen ist.

In Fig. 11a bis 11c sind verschiedene Ausführungsformen möglicher optischer Schnittstellen 76, 76' bzw. 76" dargestellt. Die dargestellten Ausführungsformen können sowohl für die optische Schnittstelle 76 in dem Zentralbereich 66 als auch für eine der weiteren optischen Schnittstellen 76' in dem Außenbereich 68 Anwendung finden.

In Fig. 11a ist eine weitere Ausführungsform einer optischen Schnittstelle 76, 76' dargestellt, die mit zwei Lichtwellenleitern 80, 86 arbeitet. Bei einem relativ geringen Spaltmaß zwischen der ersten Systemkomponente 58 und der zweiten Systemkomponente 60 kann eine derartige Übertragung zwischen zwei Lichtwellenleitern bereits ausreichend sein.

In Fig. 11b ist eine weitere Ausführungsform gezeigt. In diesem Fall weist die zweite Systemkomponente 60 ein optisches Koppelglied 84 auf, das als "graded index lens" (GRIN) ausgebildet ist. Mit diesem können die aus dem Lichtwellenleiter 86 austretenden Strahlen im Lichtwellenleiter 80 gebündelt werden. Auf diese Weise können Übertragungsverluste von der zweiten Systemkomponente 60 auf die erste Systemkomponente 58 minimiert werden.

In Fig. 11c ist eine weitere Ausführungsform gezeigt. In diesem Fall weist die zweite Systemkomponente 60 ein optisches Koppelglied 84 auf, das als optische Linse ausgebildet ist. Mit diesem können die aus dem Lichtwellenleiter 86 austretenden Strahlen im Lichtwellenleiter 80 gebündelt werden. Auf diese Weise können Übertragungsverluste von der zweiten Systemkomponente 60 auf die erste Systemkomponente 58 minimiert werden.

Die voranstehend in den Fig. 11a bis 11c für die erste Systemkomponente 58 und die zweite Systemkomponente 60 beschriebenen Anordnungen können selbstverständlich auch in umgekehrter Anordnung vorgesehen sein. Das heißt, die in den Darstellungen in der ersten Systemkomponente 58 dargestellten Elemente können auch in der zweiten Systemkomponente 60 und umgekehrt angeordnet sein, so dass sich ein spiegelbildlicher Aufbau ergibt. Des Weiteren können die beschriebenen optischen Koppelglieder selbstverständlich auch sowohl in der ersten Systemkomponente 58 als auch in der zweiten Systemkomponente 60 angeordnet sein.

Grundsätzlich sind als optische Koppelglieder 82, 84 alle Arten von optischen Elementen möglich. Die optischen Koppelglied 82, 84 können als Linsen, typischerweise als Sammellinsen, ausgeführt sein. Dabei sind bikonvexe Ausführungen genauso wie plan-konvexe Ausführungen, aber auch konkav-konvexe Oberflächengestaltungen möglich, um eine Sammellinse zu erzeugen. Ein ähnlicher lichtsammelnder Effekt kann selbstverständlich auch mittels eines diffraktiven optischen Elements (DOE) erzeugt werden, beispielsweise mittels eines Hologramms oder eines computergenerierten Hologramms (CGH). Selbstverständlich kann ein gewünschter optischer Effekt auch mit einer sogenannten "graded index lens" (GRIN) erzeugt werden. Das Brechzahlprofil über den Durchmesser kann dabei einen Verlauf mit Stufen, aber auch einen stetigen Verlauf aufweisen.

Darüber hinaus kann es vorteilhaft sein, im Falle von Lichtwellenleitern 80, 86 die Faserenden schräg zu einer optischen Übertragungsachse auszurichten. Ausführungsformen hierzu sind in den Fig. 12a und 12b dargestellt.

In Fig. 12a ist eine optische Übertragungsachse mit dem Bezugszeichen 88 bezeichnet. Entsprechend kann vorgesehen sein, eine Austrittsfläche bzw. Stirnfläche eines Lichtwellenleiters 80, 86 unter einem Winkel 92 zu der optischen Übertragungsachse 88 auszurichten. Auf diese Weise ist es in der Regel möglich, Störungen aufgrund von Reflexionen zu vermeiden.

In Fig. 12b ist eine alternative Ausführungsform dargestellt. In dieser ist eine Längsachse 93 einschließlich des Lichtwellenleiters 80, 86 unter einem Winkel 94 zu der optischen Übertragungsachse 88 ausgerichtet. Darüber hinaus ist natürlich auch denkbar, sowohl die Stirnfläche 90 schräg auszurichten, als auch die Längsachse 93 schräg zu der Übertragungsachse 88 auszurichten. Selbstverständlich sollte dann im Ergebnis die Stirnfläche 90 aber nicht senkrecht zu der Übertragungsachse ausgerichtet sein.

Für die Winkel 92, 94 werden in der Regel wenige Grad gewählt, beispielsweise 1° bis 5° oder 3° bis 6°.

In Fig. 13a bis 13d sind verschiedene Ausführungsformen zur Bereitstellung einer elektrischen Schnittstelle bzw. Schnittstelleneinrichtung 74 dargestellt.

In Fig. 13a ist eine Stecker-Buchse-Verbindung dargestellt. Die Verbindung zwischen der ersten Systemkomponente 58 und der zweiten Systemkomponente 60 wird dabei mittels eines Steckers 96 und einer Buchse 98 bereitgestellt. In der dargestellten Ausführungsform ist der Stecker 96 in der ersten Systemkomponente 58 angeordnet und die Buchse 98 in der zweiten Systemkomponente 60 angeordnet. Selbstverständlich kann dies auch umgekehrt der Fall sein. In der Regel ist darüber hinaus vorgesehen, dass entweder der Stecker 96 oder die Buchse 98 schwimmend gelagert ist, um ein automatisches Finden des Steckers 96 und der Buchse 98 zu erleichtern und Verspannungen in der Stecker-Buchse-Verbindung zu vermeiden.

In Fig. 13b weist die erste Systemkomponente 58 einen mittels einer Feder 102 vorgespannten Kontaktstift 100 auf. Dieser wird über die Federvorspannung an eine Anschlagfläche 104 der zweiten Systemkomponente 60 gedrückt. Auf diese Weise kann ebenfalls eine elektrische Schnittstelle 74 bereitgestellt werden.

Letztlich ist in Fig. 13c dargestellt, dass auch ein erstes Lagerteil 106 und ein zweites Lagerteil 108 in der Dreipunktlagerung 70 eine elektrische Schnittstelle zwischen der ersten Schnittstelle 58 und der zweiten Systemkomponente 60 bereitstellen können.

Die Sicherheit der Kontakte bzw. des elektrischen Übertragungswegs zwischen der ersten Systemkomponente 58 und der zweiten Systemkomponente 60 nimmt von der in Fig. 13a dargestellten Ausführungsform zu der in Fig. 13c dargestellten Ausführungsform ab. Andererseits ist in der in Fig. 13c dargestellten Ausführungsform keinerlei mechanische Rückwirkung auf die relative Positionierung der ersten Systemkomponente 58 zu der zweiten Systemkomponente 60 vorhanden, da lediglich das ohnehin vorhandene Dreipunktlager 70 verwendet wird. Je nach Anwendungsfall kann daher eine der in den Fig. 13a bis 13c dargestellten Ausführungsformen vorteilhaft sein.

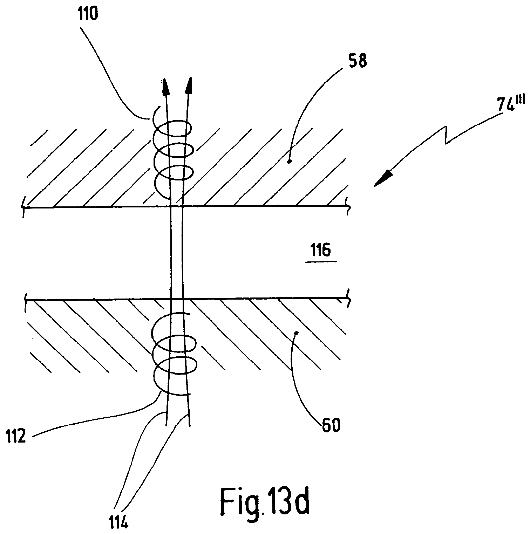

Letztlich ist in Fig. 13d eine weitere Ausführungsform einer elektrischen Schnittstelle 74 dargestellt. In dieser wird eine elektrische Schnittstelle 74 zwischen der ersten Systemkomponente 58 und der zweiten Systemkomponente 60 über einen zwischen diesen befindlichen Spalt 116 kontaktlos bereitgestellt. Insbesondere eignet sich hierzu das Prinzip der Gegeninduktion bzw. die Verwendung induktiver Resonanzübertrager. Dieses kann sowohl für eine elektrische Energieübertragung als auch für eine Übertragung von elektrischen Signalen Verwendung finden. Der Aufbau ist in der Fig. 13d lediglich schematisch dargestellt. In der Regel ist dazu sowohl in der ersten Systemkomponente 58 als auch in der zweiten Systemkomponente 60 jeweils eine Spule 110, 112 angeordnet. Durch Beaufschlagung einer der Spulen, beispielsweise der Spule 110, wird ein Magnetfeld erzeugt, das schematisch durch Feldlinien 114 in einer Skizze angedeutet ist. Die Feldlinien führen auch durch die jeweils andere Spule, beispielsweise die Spule 112, und durch das Induktionsprinzip fließt nun in der Spule 112 erneut ein Strom. Aufgrund des geringen Maßes des Spalts 116 kann auf diese Weise auch kontaktlos eine elektrische Schnittstelle 74 zwischen der ersten Systemkomponente 58 und der zweiten Systemkomponente 60 bereitgestellt werden.

Als besonders vorteilhaft wird dabei eine Kombination aus einer derartigen kontaktlosen Übertragung für elektrische Energie und einer Verwendung optischer Schnittstellen zur Übertragung von Daten bzw. Datensignalen zwischen der ersten Systemkomponente 58 und der zweiten Systemkomponente 60 angesehen. Insbesondere hat eine derartige Variante den Vorteil, dass die Signale galvanisch entkoppelt sind.

Für alle vorgeschlagenen Systeme zur Übertragung elektrischer Energie kommt darüber hinaus in Betracht, dass sie zusammen mit Systemen arbeiten, die unter der Bezeichnung "Energie-Harvesting" bekannt sind. Diese Systeme können auch kleinste Energiemengen wandeln und nutzbar machen. Einige Beispiele sind die Nutzung elektromagnetischer Strahlung, etwa mittels passiver RFIDs, oder die Photovoltaik.

## Patentansprüche

1. Verfahren (130) zum Koppeln einer ersten Systemkomponente (58) und einer zweiten Systemkomponente (60) eines Messgeräts (10) zum Ermitteln einer Eigenschaft eines zu vermessenden Objekts (40) mittels mindestens eines Sensors (36), wobei eine Schnittstellenanordnung (56) zwischen der ersten Systemkomponente (58) und der zweiten Systemkomponente (60) bereitgestellt wird, wobei die Schnittstellenanordnung mit mindestens einer aus mindestens zwei elektrischen Übertragungsstrecken (132, 134) gebildeten elektrischen Schnittstelle (74; 75) zum Übertragen einer ersten elektrischen Spannung (V1) zwischen der ersten Systemkomponente (58) und der zweiten Systemkomponente (60) und mindestens einer aus Lichtwellenleitern (80, 81; 86, 87) gebildeten optischen Schnittstelle (76, 77) bereitgestellt wird, **dadurch gekennzeichnet, dass** mindestens der mindestens eine Sensor (36) mittels der mindestens zwei elektrischen Übertragungsstrecken der elektrischen Schnittstelle (74; 75) mit der ersten elektrischen Spannung versorgt wird, dass ein mittels des Sensors (36) erfasstes Messsignal (137) mittels der Lichtwellenleiter (80, 81; 86, 87) der mindestens einen optischen Schnittstelle (76, 77) übertragen wird, wobei mindestens eine elektrische Identifikationsübertragungsstrecke zum Übertragen eines Identifikationssignals zum Identifizieren einer Systemkomponente (58, 60) zwischen der ersten Systemkomponente (58) und der zweiten Systemkomponente (60) bereitgestellt wird, wobei die Schnittstellenanordnung (56) des Weiteren mit einer weiteren elektrischen Schnittstelle (75) mit mindestens zwei weiteren elektrische Übertragungsstrecken (144, 146) zum Übertragen einer zweiten elektrischen Spannung (V2) zwischen der ersten Systemkomponente (58) und der zweiten Systemkomponente (60) bereitgestellt wird, und wobei mindestens eine Logikschaltung (152) mit der zweiten elektrischen Spannung (V2) versorgt wird.

2. Verfahren nach Anspruch 1, **dadurch gekennzeichnet, dass** das Messsignal (137) ein analoges Messsignal (137) ist, und das analoge Messsignal (137) in ein digitales Messdatensignal (138) transformiert wird, und dass das digitale Messdatensignal (138) mittels der Lichtwellenleiter (80, 81; 86, 87) der mindestens einen optischen Schnittstelle (76, 77) übertragen wird.

3. Verfahren nach Anspruch 1 oder 2, **dadurch gekennzeichnet, dass** drei elektrische Übertragungsstrecken (132, 134, 142) zum Übertragen der ersten elektrischen Spannung (V1) zwischen der ersten Systemkomponente (58) und der zweiten Systemkomponente (60) bereitgestellt werden, und dass die erste elektrische Spannung (V1) als eine symmetrische Spannung übertragen wird.

4. Verfahren nach einem der Ansprüche 1 bis 3, **dadurch gekennzeichnet, dass** mindestens eine Logikschaltung (152) zumindest mittelbar mit der ersten Spannung (V1) versorgt wird.

5. Verfahren nach einem der Ansprüche 1 bis 4, **dadurch gekennzeichnet**, das weitere Leistungsverbraucher (151) mit der ersten Spannung (V1) versorgt werden.

6. Verfahren nach einem der Ansprüche 1 bis 5, **dadurch gekennzeichnet, dass** drei weitere elektrische Übertragungsstrecken (144, 146, 148) zum Übertragen einer zweiten elektrischen Spannung (V2) zwischen der ersten Systemkomponente (58) und der zweiten Systemkomponente (60) bereitgestellt werden, und dass die zweite elektrische Spannung (V2) als eine symmetrische Spannung übertragen wird.

7. Verfahren nach einem der Ansprüche 1 bis 6, **dadurch gekennzeichnet, dass** eine elektrische Synchronisationsleitung zum Übertragen eines Synchronisationssignals zwischen der ersten Systemkomponente (58) und der zweiten Systemkomponente (60) bereitgestellt wird.

8. Verfahren nach einem der Ansprüche 1 bis 7, **dadurch gekennzeichnet, dass** mittels der Lichtwellenleiter (80, 81; 86, 87) der mindestens einen optischen Schnittstelle (76, 77) mehrere Signale parallel übertragen werden.

9. Verfahren nach einem der Ansprüche 1 bis 8, **dadurch gekennzeichnet, dass** mehr als eine optische Schnittstelle (76, 77) bereitgestellt wird.

10. Verfahren nach Anspruch 8 oder 9, **dadurch gekennzeichnet, dass** ein Synchronisationssignal zwischen der ersten Systemkomponente (58) und der zweiten Systemkomponente (60) mittels der Lichtwellenleiter (80, 81; 86, 87) der mindestens einen optischen Schnittstelle (76, 77) übertragen wird.

11. Verfahren nach einem der Ansprüche 9 bis 10, **dadurch gekennzeichnet, dass** eine erste (76) und eine zweite (77) optische Schnittstelle bereitgestellt werden, wobei mittels der ersten optischen Schnittstelle (76) unidirektional das digitale Messsignal übertragen wird, und wobei mittels der zweiten optischen Schnittstelle (77) eine bidirektional Kommunikation zum Kommunizieren mit mindestens einer Logikschaltung (152) und/oder Regelungseinrichtung (151) des Sensors (36) und/oder einer Antriebseinrichtung des Messgeräts (10) bereitgestellt wird.

12. Messgerät (10) zum Ermitteln einer Eigenschaft eines zu vermessenden Objekts (40) mittels mindestens eines Sensors (36), mit einer ersten Systemkomponente (58) und einer zweiten Systemkomponente (60), wobei eine Schnittstellenanordnung (56) zwischen der ersten Systemkomponente (58) und der zweiten Systemkomponente (60) gebildet ist, wobei die Schnittstellenanordnung (56) mindestens einer aus mindestens zwei elektrischen Übertragungsstrecken (132, 134) gebildete elektrische Schnittstelle (76, 77) zum Übertragen von elektrischer Energie zwischen der ersten Systemkomponente (58) und der zweiten Systemkomponente (60) und mindestens eine aus Lichtwellenleitern (80, 81; 86, 87) gebildete optische Schnittstelle (76, 77) aufweist, **dadurch gekennzeichnet, dass** der mindestens eine Sensor (36) zur Versorgung mit elektrischer Energie mit den mindestens zwei elektrischen Übertragungsstrecken (132, 134) verbunden ist, und dass das Messgerät (10) des Weiteren derart ausgebildet ist, dass eine Übertragung des mittels des Sensors (36) erfassten Messsignals (137) über die mindestens eine optische Schnittstelle (76, 77) erfolgt, wobei mindestens eine elektrische Identifikationsübertragungsstrecke zum Übertragen eines Identifikationssignals zum Identifizieren einer Systemkomponente (58, 60) zwischen der ersten Systemkomponente (58) und der zweiten Systemkomponente (60) bereitgestellt ist, wobei die Schnittstellenanordnung (56) des Weiteren eine weiteren elektrischen Schnittstelle (75) mit mindestens zwei weiteren elektrische Übertragungsstrecken (144, 146) zum Übertragen einer zweiten elektrischen Spannung (V2) zwischen der ersten Systemkomponente (58) und der zweiten Systemkomponente (60) aufweist, und wobei mindestens eine Logikschaltung (152) zur Versorgung mit einer zweiten elektrischen Spannung (V2) mit den zwei weiteren elektrischen Übertragungsstrecken (144, 146) verbunden ist.

13. Messgerät (10) nach Anspruch 12, **dadurch gekennzeichnet, dass** das Messgerät (10) des Weiteren einen Analog-Digital-Umsetzer (136) zum Transformieren einer mittels des Sensors (36) erfassten analogen Messsignals (137) in ein digitales Messdatensignal (138) aufweist, der derart mit der optischen Schnittstelle (76, 77) verbunden ist, dass eine Übertragung des digitalen Messdatensignals (138) über die mindestens eine optische Schnittstelle (76, 77) erfolgt.

14. Messgerät nach Anspruch 13, **dadurch gekennzeichnet, dass** die erste Systemkomponente (58) und/oder die zweite Systemkomponente (60) ein optisches Koppelglied (82, 84) für die mindestens eine optische Schnittstelle (76, 77) aufweist.

## Claims

1. Method (130) for coupling a first system component (58) and a second system component (60) of a measuring device (10) for determining by means of at least one sensor (36) a property of an object (40) to be measured, wherein an interface arrangement (56) is provided between the first system component (58) and the second system component (60), wherein the interface arrangement is provided with at least one electrical interface (74; 75), formed from at least two electric transmission links (132, 134), for transmitting a first electrical voltage (V1) between the first system component (58) and the second system component (60), and with at least one optical interface (76, 77) formed from light waveguides (80, 81; 86, 87), **characterized in that** at least the at least one sensor (36) is supplied with the first electrical voltage by means of at least two electrical transmission links of the electrical interface (74; 75), and **in that** a measurement signal (137) acquired by means of the sensor (36) is transmitted by means of the light waveguides (80, 81; 86, 87) of the at least one optical interface (76, 77), wherein at least one electrical identification transmission link is provided for transmitting an identification signal for identifying a system component (58, 60) between the first system component (58) and the second system component (60), wherein the interface arrangement (56) is furthermore provided with a further electrical interface (75) having at least two further electrical transmission links (144, 146) for transmitting a second electrical voltage (V2) between the first system component (58) and the second system component (60), and wherein at least one logic circuit (152) is supplied with the second electrical voltage (V2).

2. Method according to Claim 1, **characterized in that** the measurement signal (137) is an analog measurement signal (137) and the analog measurement signal (137) is converted into a digital measurement data signal (138), and **in that** the digital measurement data signal (138) is transmitted by means of the light waveguides (80, 81; 86, 87) of the at least one optical interface (76, 77).

3. Method according to Claim 1 or 2, **characterized in that** three electrical transmission links (132, 134, 142) are provided for transmitting the first electrical voltage (V1) between the first system component (58) and the second system component (60), and **in that** the first electrical voltage (V1) is transmitted as a symmetrical voltage.

4. Method according to one of Claims 1 to 3, **characterized in that** at least one logic circuit (152) is supplied at least indirectly with the first voltage (V1).

5. Method according to one of Claims 1 to 4, **characterized in that** further power loads (151) are supplied with the first voltage (V1).

6. Method according to one of Claims 1 to 5, **characterized in that** three further electrical transmission links (144, 146, 148) are provided for transmitting a second electrical voltage (V2) between the first system component (58) and the second system component (60), and **in that** the second electrical voltage (V2) is transmitted as a symmetrical voltage.

7. Method according to one of Claims 1 to 6, **characterized in that** an electrical synchronization line is provided for transmitting a synchronization signal between the first system component (58) and the second system component (60).

8. Method according to one of Claims 1 to 7, **characterized in that** a plurality of signals are transmitted in parallel by means of the light waveguides (80, 81; 86, 87) of the at least one optical interface (76, 77).

9. Method according to one of Claims 1 to 8, **characterized in that** more than one optical interface (76, 77) is provided.

10. Method according to Claim 8 or 9, **characterized in that** a synchronization signal is transmitted between the first system component (58) and the second system component (60) by means of the light waveguides (80, 81; 86, 87) of the at least one optical interface (76, 77).

11. Method according to one of Claims 9 to 10, **characterized in that** a first optical interface (76) and a second optical interface (77) are provided, the digital measurement signal being transmitted unidirectionally by means of the first optical interface (76), and a bidirectional communication for communicating with at least one logic circuit (152) and/or regulating device (151) of the sensor (36) and/or a drive device of the measuring device (10) is provided by means of the second optical interface (77).

12. Measuring device (10) for determining by means of at least one sensor (36) a property of an object (40) to be measured, having a first system component (58) and a second system component (60), wherein an interface arrangement (56) is formed between the first system component (58) and the second system component (60), wherein the interface arrangement (56) comprises at least one electrical interface (76, 77), formed from at least two electrical transmission links (132, 134), for transmitting electrical energy between the first system component (58) and the second system component (60), and at least one optical interface (76, 77) formed from light waveguides (80, 81; 86, 87), **characterized in that** the at least one sensor (36) is connected to the at least two electrical transmission links (132, 134) in order to be supplied with electrical energy, and **in that** the measuring device (10) is furthermore formed in such a way that transmission of the measurement signal (137) acquired by means of the sensor (36) takes place via the at least one optical interface (76, 77), wherein at least one electrical identification transmission link is provided for transmitting an identification signal for identifying a system component (58, 60) between the first system component (58) and the second system component (60), wherein the interface arrangement (56) furthermore has a further electrical interface (75) having at least two further electrical transmission links (144, 146) for transmitting a second electrical voltage (V2) between the first system component (58) and the second system component (60), and wherein at least one logic circuit (152), for supplying with a second electrical voltage (V2), is connected to the two further electrical transmission links (144, 146).

13. Measuring device (10) according to Claim 12, **characterized in that** the measuring device (10) furthermore comprises an analog/digital converter (136) for converting an analog measurement signal (137) acquired by means of the sensor (36) into a digital measurement data signal (138), which is connected to the optical interface (76, 77) in such a way that transmission of the digital measurement data signal (138) takes place via the at least one optical interface (76, 77).

14. Measuring device according to Claim 13, **characterized in that** the first system component (58) and/or the second system component (60) has an optical coupling member (82, 84) for the at least one optical interface (76, 77).

## Revendications

1. Procédé de couplage d'un premier composant de système (58) et d'un deuxième composant de système (60) d'un appareil de mesure (10) pour la détermination d'une propriété d'un objet à mesurer (40) au moyen d'au moins un capteur (36), dans lequel il est prévu un dispositif d'interface (56) entre le premier composant de système (58) et le deuxième composant de système (60), dans lequel le dispositif d'interface est constitué d'au moins une interface électrique (74 ; 75) formée à partir d'au moins deux trajets de transmission électriques (132, 134) destinés à transmettre une première tension électrique (V1) entre le premier composant de système (58) et le deuxième composant de système (60) et au moins une interface optique (76, 77) formée de guides d'ondes optiques (80, 81 ; 86, 87), **caractérisé en ce que** ledit au moins un capteur (36) est alimenté avec la première tension électrique au moyen desdits au moins deux trajets de transmission électriques de l'interface &électrique (74 ; 75), **en ce qu'**un signal de mesure (137) détecté au moyen du capteur (36) est transmis au moyen des guides d'ondes optiques (80, 81 ; 86, 87) de ladite au moins une interface optique (76, 77), dans lequel il est prévu au moins un trajet de transmission d'identification électrique destiné à transmettre un signal d'identification permettant d'identifier un composant de système (58, 60) entre le premier composant de système (58) et le deuxième composant de système (60), dans lequel le dispositif d'interface (56) est en outre pourvu d'une autre interface électrique (75) comportant au moins deux autres trajets de transmission électriques (144, 146) destinés à transmettre une deuxième tension électrique (V2) entre le premier composant de système (58) et le deuxième composant de système (60), et dans lequel au moins un circuit logique (152) est alimenté avec la deuxième tension électrique (V2).

2. Procédé selon la revendication 1, **caractérisé en ce que** le signal de mesure (137) est un signal de mesure analogique (137) et **en ce que** le signal de mesure analogique (137) est transformé en un signal de données de mesure numérique (138), et **en ce que** le signal de données de mesure numérique (138) est transmis au moyen des guides d'ondes optiques (80, 81 ; 86, 87) de ladite au moins une interface optique (76, 77).

3. Procédé selon la revendication 1 ou 2, **caractérisé en ce qu'**il est prévu trois trajets de transmission électriques (132, 134, 142) destinés à transmettre la première tension électrique (V1) entre le premier composant de système (58) et le deuxième composant de système (60) et **en ce que** la première tension électrique (V1) est transmise sous la forme d'une tension symétrique.

4. Procédé selon l'une quelconque des revendications 1 à 3, **caractérisé en ce qu'**au moins un circuit logique (152) est alimenté au moins directement avec la première tension (V1).

5. Procédé selon l'une quelconque des revendications 1 à 4, **caractérisé en ce que** d'autres consommateurs de puissance (151) sont alimentées avec la première tension (V1).

6. Procédé selon l'une quelconque des revendications 1 à 5, **caractérisé en ce qu'**il est prévu trois autres trajets de transmission électriques (144, 146, 148) destinés à transmettre une deuxième tension électrique (V2) entre le premier composant de système (58) et le deuxième composant de système (60), et **en ce que** la deuxième tension électrique (V2) est transmise sous la forme d'une tension symétrique.

7. Procédé selon l'une quelconque des revendications 1 à 6, **caractérisé en ce qu'**il est prévu une ligne de synchronisation électrique destinée à transmettre un signal de synchronisation entre le premier composant de système (58) et le deuxième composant de système (60).

8. Procédé selon l'une quelconque des revendications 1 à 7, **caractérisé en ce que** plusieurs signaux sont transmis en parallèle au moyen des guides d'ondes optiques (80, 81 ; 86, 87) de ladite au moins une interface optique (76, 77).

9. Procédé selon l'une quelconque des revendications 1 à 8, **caractérisé en ce qu'**il est prévu plus d'une interface optique (76, 77).

10. Procédé selon la revendication 8 ou 9, **caractérisé en ce qu'**un signal de synchronisation est transmis entre le premier composant de système (58) et le deuxième composant de système (60) au moyen des guides d'ondes optiques (80, 81 ; 86, 87) de ladite au moins une interface optique (76, 77).

11. Procédé selon l'une quelconque des revendications 9 à 10, **caractérisé en ce qu'**il est prévu des première (76) et deuxième (77) interfaces optiques, dans lequel le signal de mesure numérique est transmis de manière unidirectionnelle au moyen de la première interface optique (76), et dans lequel une communication bidirectionnelle est établie au moyen de la deuxième interface optique (77) pour communiquer avec au moins un circuit logique (152) et/ou avec un dispositif de régulation (151) du capteur (36) et/ou avec un dispositif d'attaque de l'appareil de mesure (10).

12. Appareil de mesure (10) destiné à déterminer une propriété d'un objet à mesurer (40) au moyen d'au moins un capteur (36), comportant un premier composant de système (58) et un deuxième composant de système (60), dans lequel il est prévu une interface (56) entre le premier composant de système (58) et le deuxième composant de système (60), dans lequel le dispositif d'interface (56) est constitué d'au moins une interface électrique (76 ; 77) formée d'au moins deux trajets de transmission électriques (132, 134) destinés à transmettre de l'énergie électrique entre le premier composant de système (58) et le deuxième composant de système (60) et au moins une interface optique (76, 77) formée de guides d'ondes optiques (80, 81 ; 86, 87), **caractérisé en ce que** ledit au moins un capteur (36) est relié auxdits au moins deux trajets de transmission électriques (132, 134) pour l'alimentation en énergie électrique, et **en ce que** l'appareil de mesure (10) est en outre conçu de manière à ce qu'une transmission du signal de mesure (137) détecté au moyen du capteur (36) soit effectuée par l'intermédiaire de ladite au moins une interface optique (76, 77), dans lequel il est prévu au moins un trajet de transmission d'identification électrique destiné à transmettre un signal d'identification permettant d'identifier un composant de système (58, 60) entre le premier composant de système (58) et le deuxième composant de système (60), dans lequel le dispositif d'interface (56) est en outre pourvu d'une autre interface électrique (75) comportant au moins deux autres trajets de transmission électriques (144, 146) destinés à transmettre une deuxième tension électrique (V2) entre le premier composant de système (58) et le deuxième composant de système (60), et dans lequel au moins un circuit logique (152) destiné à être alimenté avec la deuxième tension électrique (V2) est relié aux deux autres trajets de transmission électriques (144, 146).

13. Appareil de mesure (10) selon la revendication 12, **caractérisé en ce que** l'appareil de mesure (10) comporte en outre un convertisseur analogique-numérique (136) destiné à transformer un signal de mesure (137) analogique détecté au moyen du capteur (136) en un signal de données de mesure (138), qui est relié à l'interface optique (76, 77) de manière à ce qu'une transmission du signal de données de mesure numérique (138) soit effectuée par l'intermédiaire de ladite au moins une interface optique (76, 77).

14. Appareil de mesure selon la revendication 13, **caractérisé en ce que** le premier composant de système (58) et/ou le deuxième composant de système (60) comporte un élément de couplage optique (82, 84) destiné à ladite au moins une interface optique (76, 77).
